# EUROPÄISCHE PATENTSCHRIFT

(11) **EP 3 963 695 B1**
(45) Veröffentlichungstag und Bekanntmachung des Hinweises auf die Patenterteilung: **14.01.2026**
(21) Anmeldenummer: 20724034.2
(22) Anmeldetag: 30.04.2020
(51) Int. Cl.: H02K 15/33, H02K 3/52, H02K 5/22, H02K 3/50

(54) **ANTRIEBSMOTOR MIT EINER ANSCHLUSSEINRICHTUNG**
DRIVE MOTOR WITH A CONNECTION DEVICE
MOTEUR D'ENTRAÎNEMENT DOTÉ D'UN DISPOSITIF DE RACCORDEMENT

(30) Priorität: 02.05.2019 DE 102019111335
(43) Veröffentlichungstag der Anmeldung: 09.03.2022
(73) Patentinhaber: Festool GmbH, 73240 Wendlingen (DE)
(72) Erfinder: WALTER, Bernd, 73765 Neuhausen a.d.F. (DE); GOOS, Florian, 73230 Kirchheim/Teck (DE); BARTH, Volker, 73773 Aichwald (DE)
(74) Vertreter: Patentanwälte Bregenzer und Reule Partnerschaftsgesellschaft mbB
(86) Internationale Anmeldenummer: PCT/EP2020/062056
(87) Internationale Veröffentlichungsnummer: WO 2020/221870

(56) Entgegenhaltungen:
- EP-A2- 2 849 316
- JP-A- H11 114 674
- US-A1- 2015 188 377
- US-A1- 2018 115 215

## Beschreibung

Die Erfindung betrifft einen Antriebsmotor für ein Sauggerät oder eine Werkzeugmaschine in Gestalt einer Hand-Werkzeugmaschine oder einer halbstationären Werkzeugmaschine, gemäß dem Oberbegriff des Anspruchs 1 sowie ein Verfahren zur Montage einer derartigen elektrischen Anschlusseinrichtung eines solchen Antriebsmotors.

Eine derartige Anschlusseinrichtung ist in US 2018/0115215 A1 erläutert.

Eine derartige Anschlusseinrichtung kann man auch als Terminal bezeichnen. Die elektrische Anschlussleitung wird an das Terminal beispielsweise angesteckt oder angelötet, um auf diesem Wege eine Erregerspule elektrisch mit der Bestromungseinrichtung zu verbinden.

Typischerweise steht von einem plattenförmigen Grundkörper, der zur Verbindung mit der Anschlussleitung dient, ein Aufnahmearm schräg winkelig ab, sodass die Leiteraufnahme seitlich offen ist, um den Spulenleiter oder die Spulenleiter in die Leiteraufnahme einzuführen. Zwischen dem Aufnahmearm und dem Grundkörper ist ein gekrümmter Bodenbereich vorhanden, auf dem der Spulenleiter aufliegt. Anschließend wird der Aufnahmearm zum Grundkörper hinbewegt, beispielsweise gebogen. Schließlich wird über Schweißelektroden ein Schweißstrom in die Anschlusseinrichtung eingeleitet, der insbesondere den Bodenbereich durchfließt und dort für eine erhebliche Erhitzung sorgt, sodass beispielsweise ein Schutzlack des Spulenleiters anschmilzt und eine elektrische Verbindung zwischen dem Spulenleiter und der Anschlusseinrichtung hergestellt ist.

Die große Hitze im Bereich des Bodens der Leiteraufnahme führt allerdings in manchen Fällen dazu, dass der Spulenleiter dort in einem derartigen Maße verändert wird, dass er beim Betrieb des Antriebsmotors bricht.

Es ist daher die Aufgabe der vorliegenden Erfindung, eine verbesserte Anschlusseinrichtung bereitzustellen.

Zur Lösung der Aufgabe ist ein Antriebsmotor gemäß der technischen Lehre des Anspruchs 1 vorgesehen.

Die Aufnahmeöse ist um die Leiteraufnahme ringförmig geschlossen, sodass der Schweißstrom um die Leiteraufnahme herum fließt oder fließen kann.

Der Aufnahmearm und der Grundkörper bilden zur Aufnahme der mindestens einen Spulenleiters eine die Leiteraufnahme ringförmig umschließende Aufnahmeöse, die zwei elektrisch leitende Verbindungsbereiche zwischen dem Grundkörper und dem Aufnahmearm aufweist, zwischen denen die Leiteraufnahme angeordnet ist.

Es ist dabei ein Grundgedanke, dass der Strom nicht nur über einen elektrischen Verbindungsabschnitt, beispielsweise den Übergangsbereich oder Verbindungsabschnitt zwischen Grundkörper und Aufnahmearm fließt, sondern über einen zweiten Verbindungsbereich, sodass die Leiteraufnahme zwischen den Verbindungsbereichen quasi vom Schweißstrom durchflossen ist. Weiterhin sorgen die zwei elektrischen Verbindungsabschnitte dafür, dass der Schweißstrom die Anschlusseinrichtung nicht partiell in hohem Maße erhitzt, sondern dass zwei Verbindungsabschnitte genutzt werden, sodass die Wärmeverteilung günstiger ist. Dadurch wird beispielsweise der Spulenleiter weniger warm und somit weniger beeinträchtigt.

Ein erfindungsgemäßes Verfahren sieht die Merkmale des Anspruchs 13 vor. Insbesondere ist es vorteilhaft, wenn das Verfahren ein Verstellen, insbesondere Biegen, des Aufnahmearms, insbesondere anhand mindestens einer Schweißelektrode, aus einer von dem Grundkörper beabstandeten Stellung, in der die Leiteraufnahme einen geöffneten Zustand aufweist und zum Einführen des Spulenleiters an einer Seite offen ist, in eine zu dem Grundkörper hin verstellte Stellung umfasst, in der die Leiteraufnahme den geschlossenen Zustand aufweist. Der Aufnahmearm ist also zunächst vom Grundkörper weg verstellt, sodass der mindestens eine Spulenleiter leicht in die Leiteraufnahme einführbar ist. Sodann wird der Aufnahmearm zum Grundkörper hinbewegt, die Leiteraufnahme also geschlossen. Zu diesem Verstellen oder Biegen kann eine von der Schweißelektrode separate Biegeeinrichtung verwendet werden, beispielsweise ein Druckstempel oder dergleichen. Vorteilhaft ist aber, wenn die Schweißelektroden gleichzeitig die Stelleinrichtung oder Biegeeinrichtung bereitstellen.

An dieser Stelle sei erwähnt, dass vorteilhaft mindestens eine der Schweißelektroden an ihrem freien Ende eine Spitze aufweist oder schmal ausläuft, sodass sie in einen Zwischenraum zwischen dem die Anschlusseinrichtung tragenden Stator, insbesondere einem Trägerkörper des Stators, und die Anschlusseinrichtung einführbar ist. Diese Schweißelektrode ist vorzugsweise eine die Anschlusseinrichtung, insbesondere deren Grundkörper stationär abstützende Schweißelektrode. Eine dieser Schweißelektrode gegenüberliegende Schweißelektrode dient zum Verstellen des Aufnahmearms zum Grundkörper hin.

Das Material der Anschlusseinrichtung im Bereich der Aufnahmeöse, also beispielsweise der Grundkörper und der vom Grundkörper abstehende Aufnahmearm, ist vorzugsweise ein Metallmaterial, insbesondere ein weiches Metallmaterial, beispielsweise Kupfer, Aluminium oder dergleichen. Eine Härte des Materials der Anschlusseinrichtung im Bereich der Aufnahmeöse entspricht beispielsweise einer Mohshärte von 2,5 bis 3 oder einer Vickershärte (VHN) von 77-99 bei einer Prüfkraft von 100 g.

Es kann vorgesehen sein, dass der Aufnahmearm sozusagen für den elektrischen Kontakt bzw. zur Herstellung des elektrischen Verbindungsbereichs mit dem Grundkörper mechanisch vorbereitet oder ausgestaltet ist, indem beispielsweise ein Schließschenkel von einem Armabschnitt des Aufnahmearms in Richtung des Grundkörpers vorsteht. Es ist aber auch möglich, dass beispielsweise die Schweißelektrode(n) oder ein Druckstempel den Aufnahmearm bearbeitet, insbesondere verformt. Vorteilhaft ist ein partielles Verformen eines Endbereichs des Aufnahmearms, insbesondere anhand mindestens einer Schweißelektrode, in Richtung des Grundkörpers derart vorgesehen, dass ein freies Ende des Aufnahmearms, insbesondere eine Stirnseite oder Schmalseite des Aufnahmearms, zur Bildung eines der elektrischen Verbindungsbereiche vor und bei der Bestromung mit dem Schweißstrom in Berührkontakt mit dem Grundkörper ist. Beispielsweise kann die Schweißelektrode oder der Druckstempel den Schließschenkel durch Verformung des Aufnahmearms bilden.

Vorteilhaft ist der Aufnahmearm aus einer von dem Grundkörper beabstandeten Stellung, in der die Leiteraufnahme einen geöffneten Zustand aufweist und zum Einführen des mindestens einen Spulenleiters an einer Seite offen ist, in eine zu dem Grundkörper hin verstellte Stellung verstellbar, in der die Leiteraufnahme den geschlossenen Zustand aufweist. Beispielsweise bildet der Aufnahmearm einen Hakenvorsprung bildet, der in dem geöffneten Zustand der Leiteraufnahme vor den Grundkörper vorsteht. Die Leiteraufnahme weist also im geöffneten Zustand eine Einführöffnung auf. Beispielsweise steht der Aufnahmearm in der geöffneten Stellung der Leiteraufnahme V-förmig vom Grundkörper ab.

Vorteilhaft ist vorgesehen, dass ein freies Ende des Aufnahmearms, insbesondere eine Stirnseite oder Schmalseite des Aufnahmearms, zur Bildung eines der elektrischen Verbindungsbereiche vor und bei der Bestromung mit dem Schweißstrom in Berührkontakt mit dem Grundkörper ist. Der Berührkontakt wird beispielsweise dadurch aufrechterhalten, dass die Schweißelektroden, die am Aufnahmearm und Grundkörper anliegen, das freie Ende des Aufnahmearms in Berührkontakt und elektrischem Kontakt mit dem Grundkörper halten. Gerade in dem Berührkontakt-Bereich entsteht bei Beaufschlagung der Anschlusseinrichtung mit Schweißstrom eine solche Hitze, dass das zunächst noch freie Ende des Aufnahmearms mit dem Grundkörper verschmilzt oder verschweißt.

Vorteilhaft ist es möglich, dass der der Aufnahmearm an einem oder beiden elektrischen Verbindungsbereichen mit dem Grundkörper verschweißt ist, insbesondere anhand einer elektrischen Verschweißung. Vorteilhaft ist aber, wenn der Aufnahmearm nur an einem der elektrischen Verbindungsbereiche, nämlich an seinem zunächst noch freien Endbereich, mit dem Grundkörper verschweißt ist. Der Aufnahmearm kann aber auch eine vom Grundkörper zunächst separate Komponente sein, die an den Verbindungsbereichen mit dem Grundkörper verschweißt wird. Beispielweise kann der Aufnahmearm in der Art eines Schließbügels ausgestaltet sein.

Wie erläutert ist es möglich, dass der Aufnahmearm und der Grundkörper zwei voneinander separate Komponenten sind. Vorteilhaft ist jedoch, wenn der Aufnahmearm anhand eines Verbindungsabschnitts mit dem Grundkörper fest verbunden oder einstückig ist.

Der Verbindungsabschnitt kann beispielsweise einen der elektrischen Verbindungsbereiche bilden. Über den Verbindungsabschnitt kann der Schweißstrom vom Grundkörper zum Aufnahmearm fließen.

Der Verbindungsabschnitt weist insbesondere einen bogenförmigen oder gekrümmten Verlauf auf.

Beispielsweise bildet der Verbindungsbereich eine Aufnahmemulde oder einen Boden der Leiteraufnahme.

Es ist möglich, dass der Verbindungsabschnitt V-förmig oder U-förmig ist.

Der Aufnahmearm kann beispielsweise eine langgestreckte Gestalt aufweisen. Der Aufnahmearm kann aber auch einen bogenförmigen, U-förmigen oder V-förmigen Verlauf haben.

Vorteilhaft ist es, wenn der Aufnahmearm einen Armabschnitt aufweist, der einer Frontseite des Grundkörpers im Bereich der Leiteraufnahme im geschlossenen Zustand der Leiteraufnahme in einem zur Aufnahme des mindestens einen Spulenleiters geeigneten Abstand, insbesondere einem Parallelabstand, gegenüberliegt. Der Armabschnitte ist beispielsweise über den Verbindungsabschnitt mit dem Grundkörper verbunden. Der Armabschnitt und der Grundkörper im Bereich der Leiteraufnahme haben vorzugsweise eine Längsgestalt. Beispielsweise kann in dem Parallelabstand zwischen Grundkörper und Armabschnitt eine Reihenanordnung oder ein Stapel von Spulenleitern, also mindestens zwei Spulenleiter, aufgenommen sein.

Vorteilhaft ist vorgesehen, dass der Armabschnitt im geöffneten Zustand der Leiteraufnahme in einem größeren Winkel von der Frontseite des Grundkörpers absteht als im geschlossenen Zustand der Leiteraufnahme. Beispielsweise steht der Armabschnitt im geöffneten Zustand schräg winkelig vom Grundkörper ab und verläuft im geschlossenen Zustand parallel zur Frontseite des Grundkörpers.

Vorteilhaft ist es, wenn der Aufnahmearm einen von dem Armabschnitt in Richtung der Frontseite des Grundkörpers von dem Armabschnitt abstehenden Schließschenkel aufweist. Der Schließschenkel steht winkelig von dem Armabschnitt ab. Der Schließschenkel kann beispielsweise rechtwinkelig vom Armabschnitt abstehen. Bevorzugt ist jedoch eine Schrägneigung des Schließschenkels vom Armabschnitt in einem Sinne von der Leiteraufnahme weg vorgesehen.

Eine Länge des Schließschenkels und dessen Winkelstellungen bezüglich des Armabschnitts sind vorzugsweise so ausgestaltet, dass der Armabschnitt an seinen Längsendbereichen, an denen der Schließschenkel und der Verbindungsabschnitt vorgesehen sind, im geschlossenen Zustand der Leiteraufnahme denselben Abstand oder etwa denselben Abstand zur Frontseite des Grundkörpers aufweist.

Vorteilhaft ist es jedenfalls, wenn der Armabschnitt im geschlossenen Zustand der Leiteraufnahme im Wesentlichen parallel zur Frontseite des Grundkörpers verläuft.

Vorzugsweise ist weiterhin vorgesehen, dass die Leiteraufnahme im Bereich des Armabschnitts eine Längsgestalt zur Aufnahme mehrerer Spulenleiter in einer Reihenanordnung parallel zur Längserstreckung des Armabschnitts aufweist.

Vorteilhaft ist eine Steckmontage. Insbesondere ist vorgesehen, dass der Grundkörper mindestens einen Steckvorsprung zum Einstecken in eine Steckaufnahme des Stators aufweist.

Der Steckvorsprung kann beispielsweise parallel zur Längserstreckung der Leiteraufnahme verlaufen. Beispielsweise ist es möglich, dass der Anschlusskontakt Bereich und der Steckvorsprung an einander entgegengesetzten Längsendbereichen des Grundkörpers vorgesehen sind.

Bevorzugt ist jedoch, wenn der mindestens eine Steckvorsprung seitlich vor den Grundkörper und/oder den Aufnahmearm vorsteht. Beispielsweise bildet der Steckvorsprung einen vor den Grundkörper seitlich vorstehenden Seitenschenkel. Der Aufnahmearm hingegen bildet vorzugsweise einen vor den Grundkörper frontal vorstehenden vorderen Schenkel.

Vorzugsweise ist vorgesehen, dass von dem Grundkörper an einander entgegengesetzten Seiten jeweils ein Steckvorsprung absteht. Die Steckvorsprünge und der Anschlusskontaktbereich können beispielsweise eine T-förmige Konfiguration bilden.

Vorteilhaft ist es, wenn der mindestens eine Steckvorsprung an seinem freien, vom Grundkörper abstehenden Endbereich mindestens eine Formschlusskontur zum formschlüssigen Eingriff in die Steckaufnahme des Stators, insbesondere eine Zahnung, aufweist. Die Formschlusskontur kann aber auch beispielsweise einen Widerhaken, gerundete Abschnitte oder dergleichen aufweisen. Wenn die Anschlusseinrichtung vom Schweißstrom durchflossen ist, erhitzt sie sich, sodass das Material des Stators im Bereich der Steckaufnahme, vorzugsweise ein Kunststoffmaterial, weich wird und mit der mindestens einen Formschlusskontur verschmilzt. Selbstverständlich ist es auch möglich, dass die mindestens eine Formschlusskontur eine oder mehrere scharfe Kanten aufweist, die in die Steckaufnahme des Stators einschneidet und dort für einen Halt der Anschlusseinrichtung sorgt.

Zweckmäßigerweise ist vorgesehen, dass der mindestens eine Steckvorsprung an einem die Leiteraufnahme begrenzenden Abschnitt des Grundkörpers angeordnet ist. Der Steckvorsprung sorgt bei dieser Konfiguration für einen Halt der Anschlusseinrichtung im Bereich der Leiteraufnahme. Beispielsweise entsteht dadurch die bereits erwähnte T-förmige Gestalt.

Vorteilhaft ist weiterhin, wenn ein freier Endbereich des mindestens einen Steckvorsprungs und der Grundkörper in zueinander parallelen und voneinander beabstandeten Ebenen liegen. Der Steckvorsprung und der Grundkörper sind beispielsweise anhand einer Stufe miteinander verbunden.

Insbesondere vorteilhaft ist es, wenn zwischen dem mindestens einen Steckvorsprung und dem Grundkörper eine Stufe vorhanden ist.

Erfindungsgemäß ist vorgesehen, dass an mindestens einem der elektrischen Verbindungsbereiche zwischen dem Grundkörper und dem Aufnahmearm eine Stützkontur zum Abstützen des mindestens einen Spulenleiters in einem Abstand zu einer Innenfläche, insbesondere einem Boden, der Leiteraufnahme an dem Verbindungsbereich angeordnet ist, sodass der mindestens eine Spulenleiter nicht in Berührkontakt mit dem Verbindungsbereich während einer Bestromung mit dem Schweißstrom ist. Die mindestens eine Stützkontur, vorzugsweise mehrere Stützkonturen, sorgen dafür, dass durch den Schweißstrom erzeugte Wärme nicht oder in geringerem Maße vom Verbindungsbereich auf den mindestens einen Spulenleiter einwirkt.

Eine erste Alternative der Erfindung sieht vor, dass die mindestens eine Stützkontur einen Bestandteil der Anschlusseinrichtung bildet. Beispielsweise kann an dem Grundkörper eine Stützkontur angeordnet sein, zum Beispiel eine Vertiefung, an der der Spulenleiter im Abstand zu dem Verbindungsbereich zwischen Grundkörper und Aufnahmearm abgestützt ist. Wenn die Anschlusseinrichtung die Stützkontur bereitstellt, ist vorteilhaft, wenn zwischen der Stützkontur und dem Verbindungsbereich eine thermische Isolation vorhanden ist. Beispielsweise kann ein Trägerkörper aus Kunststoff oder dergleichen am Grundkörper angeordnet sein, der die Stützkontur der Anschlusseinrichtung bereitstellt.

In einer zweiten Alternative der Erfindung ist vorgesehen, dass die Stützkontur an einer von der Anschlusseinrichtung separaten Komponente, und zwar an dem Stator angeordnet ist. Beim Verfahren kann vorgesehen sein, dass sie an einer Montageeinrichtung angeordnet ist. Insbesondere vorteilhaft ist es, wenn ein Trägerkörper des Stators, beispielsweise ein Kunststoff-Trägerkörper des Stators, der ein Blechpaket des Stators trägt und/oder ummantelt, die Stützkontur bereitstellt. Es ist beim Verfahren möglich, dass die Stützkontur keinen Bestandteil des Antriebsmotors bildet, sondern an der Montageeinrichtung angeordnet ist. Die Montageeinrichtung kann beispielsweise Stützvorsprünge aufweisen, die den mindestens einen Spulenleiter während des Schweißvorgangs stützen und im Abstand zu dem elektrischen Verbindungsbereich neben der Leiteraufnahme halten. Wenn der Schweißvorgang abgeschlossen ist, ist die Abstützung nicht mehr notwendig. Dann kann der Spulenleiter beispielsweise bereits mit dem Material der Anschlusseinrichtung partiell verschmolzen sein, sodass er ortsfest bezüglich der Leiteraufnahme gehalten ist.

Eine Anordnung der Anschlusseinrichtung zwischen zwei Stützkonturen ist vorteilhaft.

Vorteilhafterweise ist vorgesehen, dass ein elektrischer Verbindungsbereich zwischen dem Grundkörper und dem Aufnahmearm zwischen zwei Stützkonturen des Stators, insbesondere zwei Stützkonturen an einem elektrisch isolierenden Trägerkörper des Stators, angeordnet ist, wobei die Stützkonturen den mindestens einen Spulenleiter in einem Abstand zu dem insbesondere muldenförmigen Verbindungsbereich abstützen. Beispielsweise können an dem Trägerkörper des Stators Stützschultern vorgesehen sein, auf denen der mindestens eine Spulenleiter aufliegt.

Zur mechanischen Schonung des Spulenleiters können zwar weitere Maßnahmen vorgesehen sein. Beispielsweise vorteilhaft ist es, wenn die Anschlusseinrichtung im Bereich der Leiteraufnahme eine langgestreckte Auflagefläche sowie eine dazu winkelige seitliche Schmalseite aufweist, wobei zwischen der Auflagefläche und der Schmalseite eine zur Auflagefläche und zur Schmalseite schräggeneigte Schrägfläche zum Abstützen des mindestens einen Spulenleiters angeordnet ist. Die Auflagefläche ist beispielsweise an einem Boden der Lageraufnahme vorgesehen. Der Begriff Auflagefläche ist jedoch nicht so zu verstehen, dass der Spulenleiter auf der Auflagefläche aufliegt oder aufliegen muss, sondern dass er beispielsweise durch die bereits erwähnte Stützkontur oder die Stützkonturen in Abstand zu dieser Auflagefläche gehalten ist.

Der Anschlusskontaktbereich der Anschlusseinrichtung enthält beispielsweise einen Steckvorsprung oder eine Steckaufnahme zum Anstecken des Anschlussleiters, der zur Verbindung mit der Bestromungseinrichtung vorgesehen ist. Ferner weist der Anschlusskontaktbereich vorteilhaft eine Lötfläche und/oder ein Loch zum Anlöten eines Anschlussleiters auf.

Eine am Rotor angeordnete Magnetanordnung umfasst Magnete, insbesondere Permanentmagnete.

Beispielsweise bestehen magnetisierte oder zur Magnetisierung am Blechpaket des Rotors geeignete Magnetkörper der Magnete aus Aluminium-Nickel-Cobalt, Bismanol, also einer Legierung aus Bismut, Mangan und Eisen, aus einem Ferrit, z.B. einem hartmagnetischen Ferrit, z.B. auf Basis von Barium, Strontium, aus Neodym-Eisen-Bor (NdFeB), vorteilhaft mit einem Zusatz von Dysprosium, aus Samarium-Cobalt (SmCo), vorteilhaft mit 20-25 % Eisenanteil, z.B. SmCo₅, Sm₂Co₁₇, Sm(Co,Cu,Fe,Zr)_{z}, oder dergleichen. Auch Seltenerdmagnete oder Kunststoffmagnete sind möglich. Ferner eignen sich AlNiCo-Legierungen, PtCo-Legierungen, CuNiFe und CuNiCo-Legierungen, FeCoCr-Legierungen, martensitische Stähle oder MnAlC-Legierungen für die Magnetkörper.

Bei dem Antriebsmotor handelt es sich vorzugsweise um einen bürstenlosen Motor oder elektronisch kommutierten Motor. Insbesondere ist es vorteilhaft, wenn der jeweilige Stator des Antriebsmotors Permanentmagnete aufweist oder durch Permanentmagnete erregt ist.

Blechpakete des Rotors und/oder des Stators sind vorzugsweise aus geschichteten Elektroblechen oder Trafoblechen hergestellt.

Ein Stator des Antriebsmotors umfasst zweckmäßigerweise einen Trägerkörper aus Kunststoff, insbesondere aus Polyamid. Der Trägerkörper ist beispielsweise durch Vergießen und/oder Umspritzen des Blechpakets des Stators hergestellt. Es ist auch möglich, dass der Trägerkörper einen oder mehrere Steckkörper oder Steck-Trägerkörper umfasst, die an das Blechpaket angesteckt sind. Beispielsweise kann an eine oder beide Stirnseiten des Blechpakets ein derartiger Steck-Trägerkörper angesteckt sein. Der Trägerkörper deckt das Blechpaket vorzugsweise im Bereich der Rotoraufnahme und/oder im Bereich einer oder beider Stirnseiten des Blechpakets ab. An dem Trägerkörper sind vorzugsweise Stützen, Stützvorsprünge, Wickelköpfe und dergleichen zur Aufnahme von Spulenleitern der Erregerspulenanordnung vorgesehen. Weiterhin weist der Trägerkörper vorzugsweise elektrische Anschlusskontakte oder Anschlusseinrichtungen zum Anschließen einer Anschlussleitung auf, mit der der Antriebsmotor mit einer Bestromungseinrichtung verbindbar oder verbunden ist.

Nachfolgend werden Ausführungsbeispiele der Erfindung anhand der Zeichnung erläutert. Es zeigen:
- Figur 1: eine perspektivische Schrägdarstellung eines Systems zweier elektrischer Antriebsmotoren und Hand-Werkzeugmaschinen, die diese Antriebsmotoren aufweisen,

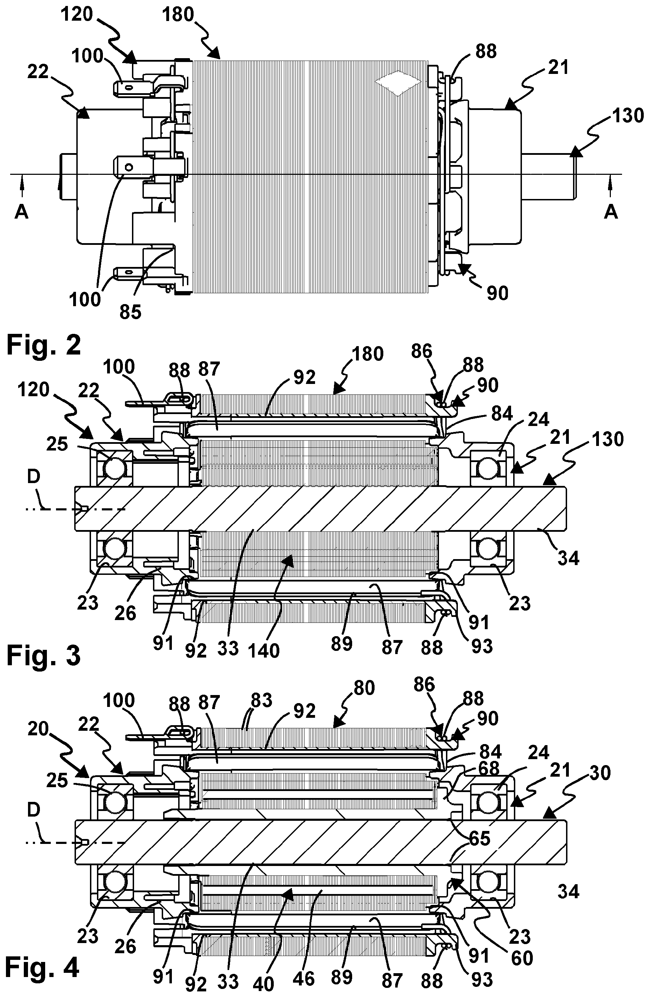

- Figur 2: eine Seitenansicht des einen Antriebsmotors des Systems gemäß Figur 1, von dem in
- Figur 3: ein Schnitt entlang einer Schnittlinie A-A in Figur 2 dargestellt ist,
- Figur 4: einen Schnitt durch den anderen Antriebsmotor des Systems gemäß Figur 1, etwa entlang derselben Schnittlinie A-A entsprechend Figur 2,
- Figur 5: eine Isolationshülse des Antriebsmotors gemäß Figur 4 in perspektivischer Darstellung,
- Figur 6: eine perspektivische Darstellung eines Rotors des Antriebsmotors gemäß Figur 4,
- Figur 7: eine Schnittdarstellung durch den Rotor gemäß Figur 6 bei dessen Herstellung, etwa entlang einer Schnittlinie B-B in Figur 6,
- Figur 8: die Ansicht etwa entsprechend Figur 7, wobei jedoch die Motorwelle vollständig in das Rotor-Blechpaket eingesteckt ist,
- Figur 9: ein Detail D1 aus Figur 8,
- Figur 10: eine perspektivische Schrägansicht auf den Stator gemäß Figur 1, etwa entsprechend einem Ausschnitt D2 in Figur 1,
- Figur 11: einen Schnitt entlang einer Schnittlinie C-C durch den Stator gemäß Figur 10 zur Veranschaulichung einer Anschlusseinrichtung, die in
- Figur 12: seitlich in offenem Zustand und
- Figur 13: seitlich in geschlossenem Zustand dargestellt ist,
- Figur 14: eine perspektivische Darstellung der Anschlusseinrichtung gemäß Figur 12 und
- Figur 15: eine perspektivische Darstellung der Anschlusseinrichtung gemäß Figur 13,
- Figur 16: eine perspektivische Schrägdarstellung zur Veranschaulichung einer Montage und Bearbeitung der Anschlusseinrichtung gemäß der Figuren 10 bis 14 in perspektivischer Schrägdarstellung, etwa entsprechend Figur 10 mit einer Schweißzange,
- Figur 17: einen Schnitt durch die Anordnung gemäß Figur 16 etwa entlang einer Schnittlinie D-D,
- Figur 18: die Abbildung gemäß Figur 17, jedoch mit zueinander bewegten Schweißzangenarmen,
- Figur 19: einen Ausschnitt D3 des Stators gemäß Figur 1 mit einer Nutabdeckung, die in
- Figur 20: perspektivisch schräg dargestellt ist,
- Figur 21: ein Detail D4 aus Figur 19 während einer Montage der Nutabdeckung gemäß Figur 17 in eine Statornut,
- Figur 22: das Detail D4, jedoch mit weiter in die Statornut verstellter Nutabdeckung und
- Figur 23: das Detail D4 mit fertig montierter Nutabdeckung,
- Figur 23B: alternative Ausführungsformen einer Nutabdeckung und einer Nut, etwa entsprechend der Ansicht gemäß Figur 23,

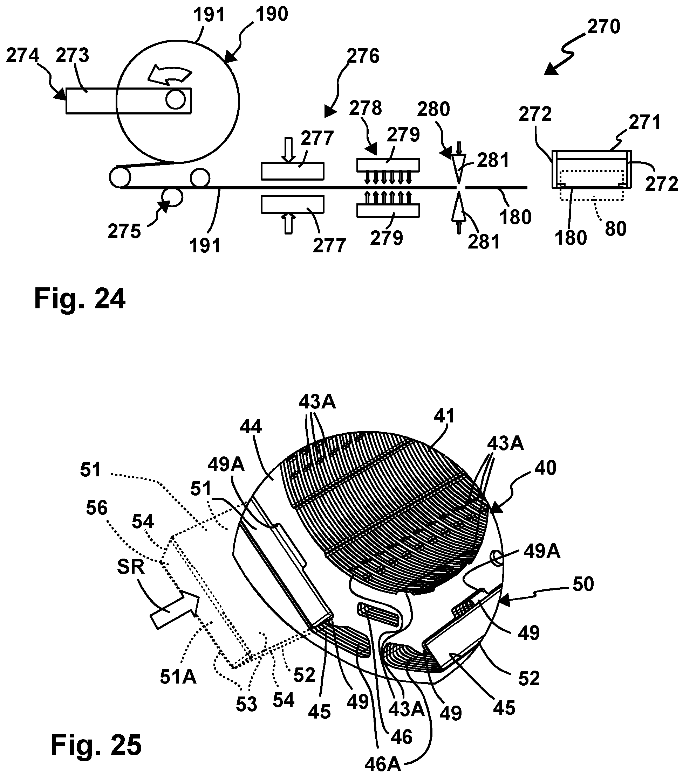

- Figur 24: eine schematische Darstellung einer Montagevorrichtung zur Herstellung der Nutabdeckung gemäß Figur 19 und deren Montage am Stator gemäß Figuren 21 bis 23,
- Figur 25: eine perspektivische Schrägansicht auf einen Ausschnitt eines Rotors der vorgenannten Motoren, etwa entsprechend einem Ausschnitt D5 in Figur 6 und

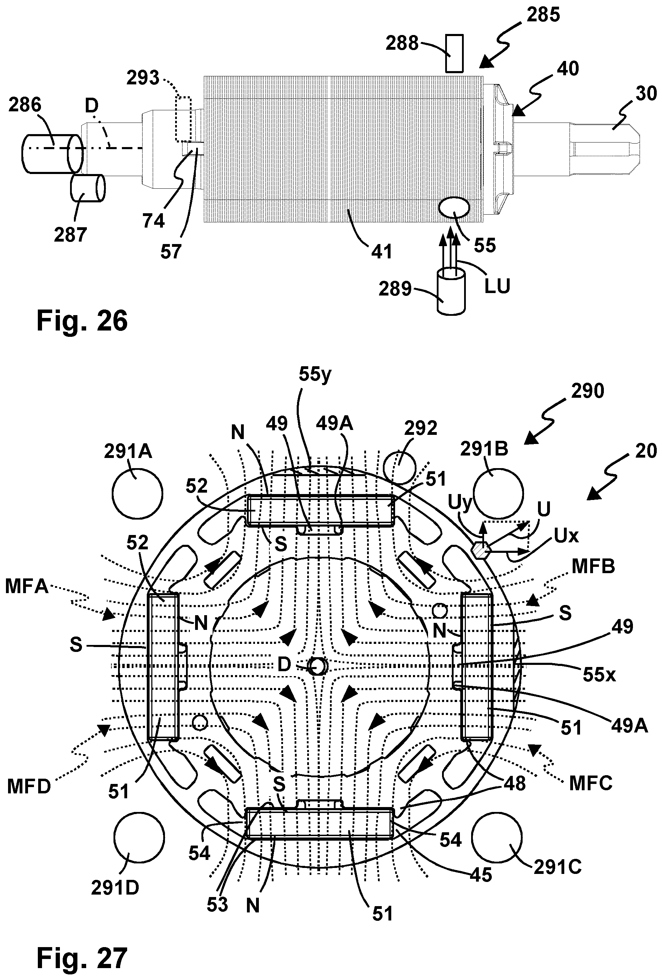

- Figur 26: eine schematische Darstellung einer Wuchteinrichtung zum Wuchten des Rotors gemäß vorstehender Figur, und
- Figur 27: eine schematische Frontalansicht auf den Rotor gemäß vorstehender Figur mit einer Magnetisierungsvorrichtung.

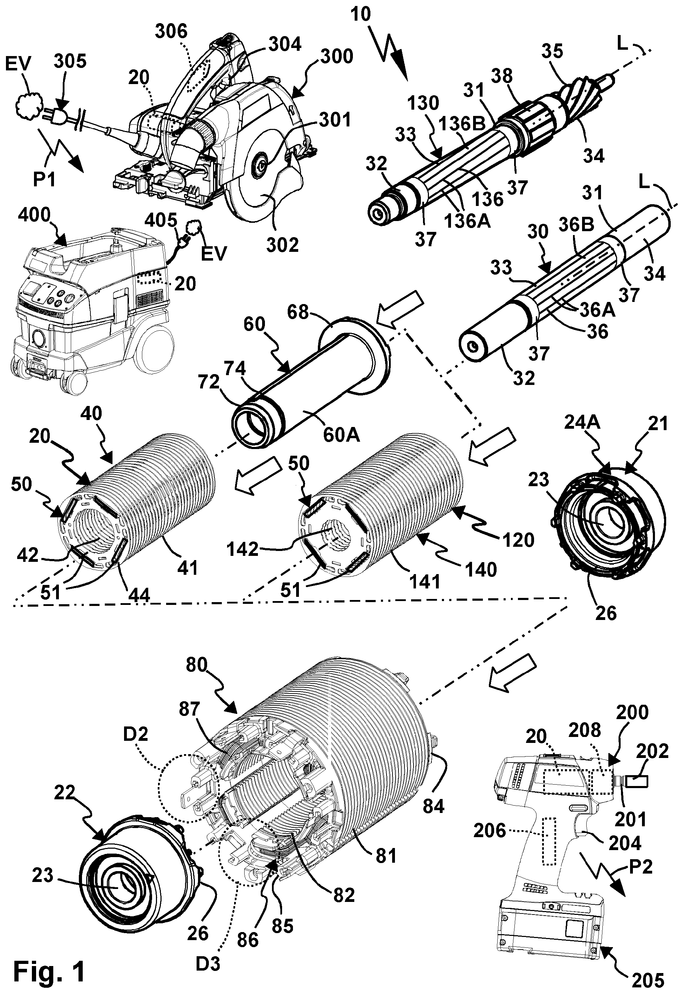

Figur 1 zeigt eine Systemdarstellung umfassend eine Hand-Werkzeugmaschine 300, beispielsweise eine Sägemaschine, bei der ein Antriebsmotor 20 eine Werkzeugaufnahme 301 für ein Arbeitswerkzeug antreibt, beispielsweise direkt oder über ein in der Zeichnung nicht sichtbares Getriebe. An der Werkzeugaufnahme 301 ist ein Arbeitswerkzeug 302, beispielsweise ein Trennwerkzeug, Sägewerkzeug oder dergleichen anordenbar oder angeordnet. Der Antriebsmotor 20 ist in einem Gehäuse 303 der Werkzeugmaschine 300 aufgenommen und kann anhand eines Schalters 304 eingeschaltet und ausgeschaltet werden. Mit dem Schalter 304 ist vorzugsweise auch eine Drehzahl des Antriebsmotors 20 einstellbar.

Zur elektrischen Stromversorgung der Hand-Werkzeugmaschine 300 dient ein Anschlusskabel 305 zum Anschluss an ein Energieversorgungsnetz EV. Das Energieversorgungsnetz EV stellt eine Versorgungsspannung P1 bereit, beispielsweise 110 V Wechselspannung, 230 V Wechselspannung oder dergleichen. Die Hand-Werkzeugmaschine 300 kann eine zwischen dem Schalter 304 und dem Antriebsmotor 20 geschaltete Bestromungseinrichtung 306 aufweisen.

Der Antriebsmotor 20 kann auch zum Betrieb eines Sauggeräts 400, insbesondere zum Antreiben einer Saugturbine des Sauggeräts 400, vorgesehen sein. Das Sauggerät 400 weist den Antriebsmotor 20 auf und ist z.B. anhand eines Anschlusskabels 405 an das Energieversorgungsnetz EV anschließbar.

Die Spannung P1 ist jedenfalls deutlich größer, z.B. mindestens viermal bis fünfmal größer, als eine Spannung P2, die einen Energiespeicher 205 einer Hand-Werkzeugmaschine 200 bereitstellt. Die Spannung P2 ist beispielsweise eine Gleichspannung von 14 V, 18 V oder dergleichen.

Die Hand-Werkzeugmaschine 200 ist beispielsweise eine Schraubmaschine, Bohrmaschine oder dergleichen. In einem Gehäuse 203 der Hand-Werkzeugmaschine 200 ist ein Antriebsmotor 120 aufgenommen, der für die niedrigere Spannung P2 geeignet ist. Der Antriebsmotor 120 wird von einer Bestromungseinrichtung 206 bestromt, die durch den Energiespeicher 205 mit elektrischer Energie versorgt wird. Der Antriebsmotor 120 treibt direkt oder über ein Getriebe 208 eine Werkzeugaufnahme 201 für ein Arbeitswerkzeug 202, beispielsweise ein Bohrwerkzeug oder Schraubwerkzeug, an. Die Bestromungseinrichtung 206 ist durch einen Schalter 204 einschaltbar, ausschaltbar und/oder zur Einstellung einer Drehzahl des Antriebsmotors 120 ausgestaltet.

Die Antriebsmotoren 20, 120 weisen teilweise gleiche oder ähnliche Komponenten auf.

Beispielsweise haben bei den Antriebsmotoren 20, 120 wahlweise verwendbare Motorwellen 30 und 130 jeweils Lagerabschnitte 31, 32, zwischen denen ein Halteabschnitt 33 vorgesehen ist. Der Lagerabschnitt 32 befindet sich neben einem Abtriebsabschnitt 34, der zum Antreiben der Werkzeugaufnahme 201 oder 301 dient. An dem Abtriebsabschnitt 34 kann beispielsweise ein Zahnrad angeordnet sein oder anordenbar sein. Alternativ ist wie bei einer Motorwelle 130 angedeutet eine Verzahnung 35 vorhanden. Der Halteabschnitt 33 weist vorzugsweise eine Formschlusskonturierung 36 auf, die sich zwischen planen, also keine Formschlusskonturierung aufweisenden Abschnitten 37 erstreckt.

Die Formschlusskonturierung 36 umfasst beispielsweise sich parallel zu einer Längsachse L der Motorwelle 30 erstreckende Nuten und/oder Vorsprünge 36A.

Aber auch eine Riffelung, wabenartige Struktur oder dergleichen kann als Formschlusskonturierung 36 vorgesehen sein.

Eine Formschlusskonturierung 136 der Motorwelle 130 umfasst beispielsweise schräg zur Längsachse L geneigte Formschlussvorsprünge 136A. Die Formschlussvorsprünge 136A haben jedoch eine geringe Schrägneigung, z.B. zwischen 5 und 15 Grad, so dass die Formschlussvorsprünge 136A im Wesentlichen parallel zur Längsachse L verlaufen.

Die Formschlusskonturierungen 36, 136 bilden beispielsweise Formschlusskonturen 36B, 136B.

Der Abtriebsabschnitt 34 kann zum Antreiben eines Lüfterrads vorgesehen sein. Beispielsweise ist eine Lüfterrad-Halterung 38 an der Motorwelle 130 vorgesehen, die beispielsweise zwischen der Verzahnung 35 und dem Lagerabschnitt 32 angeordnet ist.

Die Motorwelle 30 oder 130 ist drehfest mit einem Blechpaket 41 oder 141 eines Rotors 40, 140 verbindbar. Die Blechpakete 41, 141 weisen in einer Reihenanordnung quer zur Längsachse L nebeneinander angeordnete Bleche 43 auf, beispielsweise Elektrobleche oder Trafobleche in an sich bekannter Art.

Die Blechpakete 41, 141 weisen Wellendurchtrittsöffnungen 42, 142 auf, die unterschiedliche Durchmesser haben. Die Wellendurchtrittsöffnung 42 hat einen größeren Durchmesser als die Wellendurchtrittsöffnung 142. In die Wellendurchtrittsöffnung 42 kann die Motorwelle 30 oder 130 anhand einer Isolationshülse 60 eingesetzt werden, während in die Wellendurchtrittsöffnung 142 die Motorwellen 30 oder 130 unmittelbar eingesetzt werden können, also keine Isolationshülse oder dergleichen anderer Körper notwendig ist.

Die Isolationshülse 60 bildet einen Isolationskörper 60A, anhand dessen das Blechpaket 41 elektrisch von der jeweils es tragenden Motorwelle 30 oder 130 isoliert ist.

An den Blechpaketen 41 und 141 sind Magnetanordnungen 50 angeordnet. Die Blechpakete 41 oder 141 weisen Halteaufnahmen 45 für Magnete 50 der Magnetanordnungen 50 auf. Beispielsweise sind vier Halteaufnahmen 45 und zugeordnete Magnete 51 vorgesehen, so dass der Rotor 40, 140 insgesamt vier magnetische Pole ausbildet. Die Magnete 51 sind z.B. Permanentmagnete.

Die Magnete 51 weisen beispielsweise eine plattenförmige Gestalt auf. Die Magnete 51 sind beispielsweise Magnetplatten oder Plattenkörper 56. Die Halteaufnahmen 45 sind dementsprechend für die Aufnahme von plattenförmigen, also flach rechteckigen, kubischen Plattenkörpern oder Magnetplatten geeignet und weisen entsprechende Innenumfangskonturen auf.

Die Halteaufnahmen 45 und die Magnete 51 erstrecken sich parallel zur Längsachse L der Motorwelle 30, 130 bzw. parallel zur Drehachse D des Motors 20, 120.

Weiterhin ist der Rotor 40, insbesondere als Blechpaket 41, 141, von Luftkanälen 46 durchsetzt, die sich parallel zur Längsachse L der Motorwelle 30, 130 erstrecken und an den Stirnseiten 44 des Rotors 40, 140 offen sind, so dass die Blechpakete 41, 141 mit von Luft durchströmbar sind.

Die Wellendurchtrittsöffnung 42, 142 weist zwar eine im Wesentlichen kreisrunde Innenumfangskontur auf, hat jedoch vorteilhaft zusätzlich noch eine Verdrehsicherungskontur 47, insbesondere eine Verdrehsicherungsaufnahme 47A. Die Verdrehsicherungskontur 47 ist beispielsweise eine Längsnut 47B, die sich parallel zur Drehachse D oder Längsachse L erstreckt.

Beide Motorwellen 30, 130 können jeweils in die Blechpakete 41, 141 eingesetzt werden.

Beim Blechpaket 141, dessen Wellendurchtrittsöffnung 142 einen kleineren Durchmesser aufweist als die Wellendurchtrittsöffnung 42 des anderen Blechpakets 41, kann die jeweilige Motorwelle 30, 130 direkt in die Wellendurchtrittsöffnung 142 eingesteckt werden, z.B. eingepresst werden.

Die Schmalseiten oder Stirnseiten der Bleche 43, die den Innenumfang der Wellendurchtrittsöffnung 42 begrenzen oder in diesen vorstehen, verkrallen sich vorteilhaft mit der Motorwelle 30, 130, so dass diese in einer Kraftrichtung parallel zur Drehachse D oder zu ihrer Längsachse L unverschieblich in dem Blechpaket 141 aufgenommen ist. Eine elektrische Leitfähigkeit des Blechpakets 141 und der vorzugsweise aus Metall bestehenden Motorwelle 30, 130 ist trotz des direkten Kontakts zwischen dem Blechpaket 141 und der Motorwelle 30, 130 möglich, weil der Rotor 140 zur Verwendung mit dem Antriebsmotor 120 und somit für die niedrigere Spannung P2 vorgesehen ist.

Bei dem Rotor 40 hingegen sind Isolationsmaßnahmen getroffen, so dass trotz der elektrischen Leitfähigkeit der Motorwelle 30, 130 und des zugeordneten Blechpakets 41 eine elektrische Sicherheit gegeben ist.

Die Motorwelle 30, 130 ist nämlich anhand einer Isolationshülse 60 im Blechpaket 41 aufgenommen. Die Isolationshülse 60 bildet sozusagen einen Schutzmantel oder eine äußere Umhüllung der Motorwelle 30, 130 in demjenigen Abschnitt, der in der Wellendurchtrittsöffnung 42 aufgenommen ist.

Die Isolationshülse 60 weist zwischen ihren Längsenden 61, 62 einen Rohrabschnitt 63 auf, der sandwichartig zwischen dem Blechpaket 41 und der Motorwelle 30, 130 angeordnet ist und diese gegenüber dem Blechpaket 41 elektrisch isoliert.

Der Rohrabschnitt 63 weist eine Steckaufnahme 64 zum Durchstecken der Motorwelle 30, 130 auf, die sich vom Längsende 61 zum Längsende 62 erstreckt. Im Bereich des Längsendes 61 hat die Steckaufnahme 64 eine Einstecköffnung 64A, durch die die Motorwelle 30 in die Steckaufnahme 64 einsteckbar ist. An einer Austrittsöffnung 64B tritt die Motorwelle 30 aus der Steckaufnahme 64 heraus.

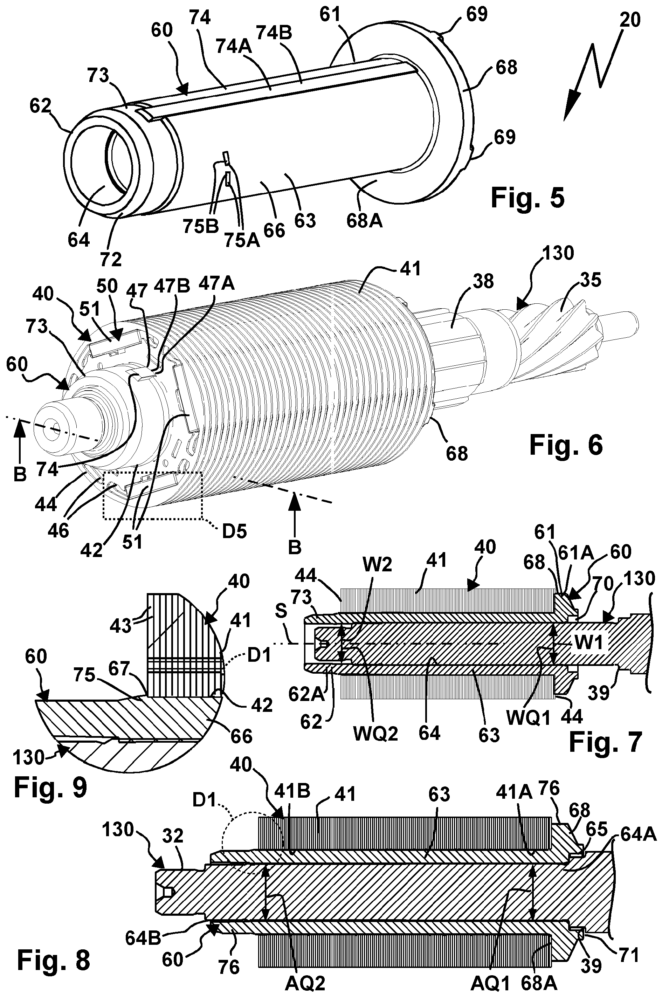

Im Bereich des Längsendes 61, also einem Längsendbereich 61A, hat die Steckaufnahme 64 einen größeren Durchmesser W1 und somit einen größeren Innenquerschnitt WQ1 als im Bereich des Längsendes 62, also einem Längsendbereich 62A, wo ein kleinerer Durchmesser W2 und somit kleinerer Innenquerschnitt WQ2 vorhanden ist. Beispielsweise beträgt der Durchmesser der Motorwelle 30, 130 im Bereich der Längsenden 61, 62 etwa 10 mm. Demgegenüber ist der Durchmesser W2 um ca. 0,2 mm bis 0,3 mm kleiner als der Durchmesser W1, bevor die Motorwelle 30, 130 in die Steckaufnahme 64 eingesteckt wird. Wenn also die Motorwelle 30, 130 wie in Figur 7 angedeutet vom Längsende 61 zum Längsende 62 in die Isolationshülse 60 entlang einer Steckachse S eingesteckt wird, dringt sie zunächst leicht oder mit Querspiel bezüglich der Steckachse S in die Einstecköffnung 64A am Längsende 61 ein, wo die Steckaufnahme 64 den Durchmesser W1 aufweist. Der Durchmesser W1 ist vorteilhaft etwas größer als der Durchmesser der Motorwelle 30, 130 an ihrem freien, zum Einstecken in die Steckaufnahme 64 vorgesehenen Längsende. Der Bereich der Einstecköffnung 64A bildet einen Zentrierabschnitt, in welchem die Motorwelle 30, 130 bezüglich der Isolierhülse 60 oder der Drehachse D zentriert wird. Beispielsweise hat die Motorwelle 30 sowohl im Bereich des Durchmessers W1 als auch im Bereich des Durchmessers W2 denselben Außenquerschnitt oder Außendurchmesser.

Alternativ oder ergänzend möglich ist es, dass beispielsweise die Motorwelle 30 einen ersten Außenquerschnitt AQ1 und einen zweiten Außenquerschnitt AQ2 aufweist, die den Längsenden 61, 62 der Steckaufnahme 64 zugeordnet sind, wobei der erste Außenquerschnitt AQ1 kleiner als der zweite Außenquerschnitt AQ2 ist. Bei dieser Ausgestaltung der Motorwelle 30 ist es auch möglich, dass die Durchmesser W1 und W2 und somit die Innenquerschnitte der Steckaufnahme 64 im Bereich der Längsenden 61 und 62 identisch oder in etwa gleich sind.

Zwischen den Längsenden 61, 62 wird die Steckaufnahme 64 dem Durchmesser W1 zum Durchmesser W2 vorzugsweise kontinuierlich enger. Möglich wäre aber auch, dass zwischen dem Durchmesser W1 und dem Durchmesser W2 mindestens eine Stufe vorhanden ist. Vorteilhaft weist die Steckaufnahme 64 einen Steckkonus auf, der vom Längsende 61 zum Längsende 62 enger wird.

Am Längsende 61 sind vorteilhaft Einführschrägen 65, beispielsweise ein Einführungskonus, vorhanden, um den Einsteckvorgang der Motorwelle 30,130 in die Steckaufnahme 64 zu erleichtern.

Wenn die Motorwelle 30, 130 entlang der Steckachse S in die Steckaufnahme 64 hineingesteckt wird, dringt sie immer weiter in Richtung des Längsendes 62 vor, wobei sie den Rohrabschnitt 63, der zum Längsende 62 hin enger wird, sozusagen aufweitet.

Die Montage gestaltet sich wie folgt:
Zunächst wird die Isolationshülse 60 in die Wellendurchtrittsöffnung 42 des Blechpakets 41 eingesteckt.

Es ist vorteilhaft vorgesehen, dass der Steckquerschnitt oder Innenquerschnitt der Wellendurchtrittsöffnung 42 über seine gesamte zum Einstecken der Isolationshülse 60 vorgesehene Länge gleich oder etwa gleich ist.

Möglich ist es aber auch, dass die Wellendurchtrittsöffnung 42 an einem zum Einstecken der Isolationshülse 60 vorgesehenen Längsendbereich 41A einen größeren Innenquerschnitt aufweist als an einem zu diesem Längsendbereich entgegengesetzten Längsendbereich 41B.

Dann wird die Motorwelle 30, 130 in die Steckaufnahme 64 eingesteckt. Somit presst die Motorwelle 30, 130, wenn sie entlang der Steckachse S in die Steckaufnahme 64 eingesteckt wird, den radialen Außenumfang des Rohrabschnitts 64 in Richtung des radialen Innenumfangs der Wellendurchtrittsöffnung 42. Die Bleche 43 dringen vorzugsweise mit ihren der Wellendurchtrittsöffnung 42 zugewandten Schmalseiten zahnartig in die Umfangswand 66 ein.

Die Steckaufnahme 64 weist den engeren Durchmesser W2 bis in einen Bereich vor dem Blechpaket 41 auf, so dass die Motorwelle 30, 130 dann, wenn sie diesen Bereich der Steckaufnahme 64 erreicht, die Umfangswand 66 des Rohrabschnitts 63 nach radial außen bezüglich der Steckachse S aufweitet und somit das Rohr bzw. den Rohrabschnitt 63 sozusagen dehnt. Dadurch bildet sich eine Formschlusspartie 75 mit einer Stufe 67 am Außenumfang der Umfangswand 63 aus, die unmittelbar in Eingriff bzw. in Hintergriff mit der Stirnseite 44 des Blechpakets 41 gelangt. Die Stufe 63 hält also die Isolationshülse 60 mit einer Kraftrichtung entgegen der Steckrichtung, in der die Motorwelle 30, 130 in die Steckaufnahme 64 einsteckbar ist, an dem Blechpaket 41.

Am anderen Längsendbereich, dem Längsende 61, weist die Isolationshülse 63 einen Flanschkörper 68 auf, der vor den Rohrabschnitt 63 nach radial außen bezüglich der Steckachse S oder der Längsachse L vorsteht.

Der Flanschkörper 68 bildet einen Längsanschlag 68A bezüglich der Steckachse S und stützt sich beispielsweise an der Stirnseite 44 des Blechpakets 41 im Bereich des Längsendes 61 ab. Der Flanschkörper 68 weist beispielsweise Verstärkungsrippen 69 auf, die sich von seinem radialen Außenumfang in Richtung der Steckaufnahme 64, d.h. radial innen zur Steckachse S hin, erstrecken. Die Verstärkungsrippen 69 sind beispielsweise an einer von dem Blechpaket 41 abgewandten Stirnseite 71 des Flanschkörpers 68 angeordnet.

An der Einstecköffnung 64A ist weiterhin ein Stützanschlag 70 für die Motorwelle 30, 130 vorgesehen, an dem ein Stützanschlag 39, beispielsweise einer Stufe, der Motorwelle 30, 130 mit einer Kraftrichtung parallel zur Steckachse S anschlagen kann. Der Stützanschlag 70 ist beispielsweise durch eine Stufe zwischen der Stirnseite 71 der Isolationshülse 60 und der Steckaufnahme gebildet.

Im Bereich des Längsendes 62 oder an der Austrittsöffnung 64B hat die Isolationshülse 60 vorzugsweise einen kleineren Außenumfang oder Durchmesser als im Bereich des Längsendes 61. Beispielsweise sind am Längsende 62 Einführschrägen 72 vorgesehen, die das Einstecken der Isolationshülse 60 in die Wellendurchtrittsöffnung 42 des Blechpakets 41 erleichtern. Das Längsende 62 ist beispielsweise als ein Steckvorsprung ausgestaltet.

Vorzugsweise steht die Isolationshülse 60 am Längsende 62 mit einem einen Isolationsabschnitt 76 bildenden Rohrabschnitt 73 vor die Stirnseite 44 des Blechpakets 41 vor, so dass dort eine elektrische Isolation zwischen einerseits der Motorwelle 30, 130 und andererseits der den Blechen 43 gegeben ist.

Am anderen Längsende 61 hingegen sorgt der Flanschkörper 68, der sozusagen seitlich vor die Wellendurchtrittsöffnung 42 vorsteht oder vorkragt, für eine elektrische Isolation und bildet ebenfalls einen Isolationsabschnitt 76. Somit ergibt sich sowohl im Bereich des Flanschkörpers 68 als auch am Rohrabschnitt 73 ein elektrischer Isolationsabstand von beispielsweise rund 8 mm bis 10 mm, beispielsweise eine Luft- und Kriechstrecke, die zur elektrischen Isolation bezüglich der Spannung P1 geeignet ist.

Am radialen Außenumfang der Isolationshülse 60, insbesondere über die gesamte Längserstreckung des Rohrabschnitts 63, ist vorzugsweise eine Verdrehsicherungskontur 74 zum Eingriff in die Verdrehsicherungskontur 47 des Blechpakets 41 angeordnet. Die Verdrehsicherungskontur 74 ist beispielsweise als Verdrehsicherungsvorsprung 74A, insbesondere als ein Längsvorsprung oder eine Längsrippe 74B ausgestaltet, der oder die sich parallel zur Steckachse S beziehungsweise Drehachse D erstreckt.

Die Isolationshülse 60 ist im Klemmsitz oder Presssitz zwischen der Motorwelle 30, 130 und dem Blechpaket 41 aufgenommen. Dadurch ist ein Kraftschluss realisiert.

Durch die Verdrehsicherungskonturen 47, 74 ist zudem noch ein Formschluss vorhanden, anhand dessen die Isolationshülse 60 bezüglich und/oder quer zur Drehachse D formschlüssig an dem Blechpaket 41 gehalten ist.

Die Formschlusskonturierung 36, 136 der Motorwellen 30, 130 greift zahnartig in den Innenumfang des Rohrabschnitts 63 ein, so dass auch die Motorwelle 30, 130 verdrehsicher bezüglich ihrer Drehachse D oder Längsachse L und/oder verschiebefest bezüglich der Drehachse D oder der Längsachse L in der Isolationshülse 60 aufgenommen ist. Die Formschlusskonturierung 36, 136 bildet vorteilhaft eine Gegen-Formschlusskonturierung am Innenumfang des Rohrabschnitts 36 aus, verformt also beispielsweise den Innenumfang des Rohrabschnitts 63 plastisch, sodass die Formschlusskonturierung 36, 136 mit dieser Gegen-Formschlusskonturierung formschlüssig in Eingriff ist. Die plastische Verformung oder Ausprägung der Gegen-Formschlusskonturierung ergibt sich oder bildet sich beispielsweise beim Einstecken der Motorwelle 30, 130 in die Isolationshülse 60.

Die Isolationshülse 60 ermöglicht es also, dass die Motorwellen 30, 130, die ohne zusätzliche Maßnahmen in das Blechpaket 141 direkt eingesteckt werden können, ohne weiteres auch mit dem Blechpaket 41 verwendbar sind. Es müssen keine unterschiedlichen Motorwellen konstruiert werden. Geometrisch sind die Motorwellen 30, 130 an den Halteabschnitten 33 identisch, die zur Verbindung mit den Blechpaketen 41 oder 141 vorgesehen sind. Beispielsweise sind Länge und Durchmesser der Halteabschnitte 33 identisch. Allerdings ist es möglich, dass zu dem jeweils optimalen Halt des Blechpakets 41 oder 141 unterschiedliche Oberflächen und/oder Oberflächen-Konturierungen im Bereich der Halteabschnitten 33 der Motorwellen 30 und 130 vorgesehen sind.

Vorzugsweise dringen in die Wellendurchtrittsöffnung 42 oder 142 vorstehende Widerlagervorsprünge 43A in den radialen Außenumfang des Rohrabschnitts 63 der Isolationshülse 60 oder den radialen Außenumfang des Halteabschnitts 33 der Motorwelle 30, 130 ein. An der Isolationshülse 60 bilden sich beispielsweise Formschlusspartien 75A, also z.B. Formschlussaufnahmen 75B aus, in die die Widerlagervorsprünge 43A eingreifen, schematisch angedeutet in Figur 5. Der radiale Außenumfang des Rohrabschnitts 63 wird beispielsweise durch die Motorwelle 30 nach radial außen bezüglich der Steckachse S oder der Drehachse D verdrängt, wobei die Widerlagervorsprünge 43A in den Rohrabschnitt 63 eindringen und sich in diesem vorzugsweise verkrallen.

Die Widerlagervorsprünge 43A sind beispielsweise an den der Wellendurchtrittsöffnung 42 oder 142 zugewandten Stirnseiten der Bleche 43 vorgesehen. Zwischen den Widerlagervorsprüngen 43A, insbesondere zwischen Gruppen von Widerlagervorsprüngen 43A sind in Bezug auf die Drehachse D vorzugsweise Abstände vorhanden, beispielsweise Winkelabstände und/oder Längsabstände. Die Widerlagervorsprünge 43A halten die Isolationshülse 60 in der Wellendurchtrittsöffnung 42 oder die Motorwelle 30, 130 in der Wellendurchtrittsöffnung 142 parallel zur Drehachse D und/oder in Umfangsrichtung bezüglich der Drehachse D. Vorzugsweise sind in Winkelabständen um die Drehachse D mehrere Widerlagervorsprünge 43A vorgesehen. Die Isolationshülse 60 wird durch die in sie eingesteckte Motorwelle 30 nach radial außen verdrängt, sodass die Widerlagervorsprünge 43A in den Außenumfang oder den Mantel oder die Umfangswand 66 der Isolationshülse 60 eindringen, insbesondere krallenartig eindringen.

Die Rotoren 40, 140 der Antriebsmotoren 20, 120 können zusammen mit einem Stator 80 verwendet werden, der eine Erregerspulenanordnung 86 aufweist. Die Erregerspulenanordnung 86 kann unterschiedlich ausgestaltete Erregerspulen 87, beispielsweise Erregerspulen 87 mit mehr oder weniger Windungen, mit unterschiedliche Leiterquerschnitten oder dergleichen, aufweisen, um den unterschiedlichen Spannungen P1 und P2 und/oder Stromstärken von Strömen, die die Erregerspulen 87 durchströmen, gerecht zu werden.

Der Stator 80 weist ein Blechpaket 81 mit einer als Durchtrittsöffnung ausgestalten Rotoraufnahme 82 für den Rotor 40, 140 auf. In der Rotoraufnahme 82 ist der Rotor 40, 140 drehbar aufgenommen, wobei ein schmaler Luftspalt zwischen dem Blechpaket 81 und dem Blechpaket 41, 141 in an sich bekannter Weise vorhanden ist.

Das Blechpaket 81 weist Bleche 83, beispielsweise Elektrobleche oder Trafobleche, auf, deren Plattenebene sich quer zur Drehachse D des Antriebsmotors 20, 120 erstreckt. Die jeweilige Motorwelle 30, 130 steht vor Stirnseiten 84, 85 des Blechpakets 81 vor, wo sie an Lagern 24, 25 einer Lageranordnung 24A drehbar gelagert ist.

Die Lager 24, 25 sind an Lageraufnahmen 23 von Lagerdeckeln 21, 22 gehalten, die den Stator 80 stirnseitig verschließen.

Die Lager 24, 25 können in die Lageraufnahmen 23 der Lagerdeckel 21, 22 eingesetzt, insbesondere eingepresst, sein. Es ist aber auch möglich, dass die Lager 24, 25 mit dem Material der Lagerdeckel 21, 22 umspritzt oder vergossen sind.

Beispielsweise sind die Lagerdeckel 21, 22 mit dem Blechpaket 41 oder einem das Blechpaket 41 tragenden Trägerkörper 90 fest verbunden, beispielsweise verschraubt, verklebt oder vorzugsweise verschweißt.

Die Lagerdeckel 21, 22 sowie der Trägerkörper 90 sind vorzugsweise aus Kunststoff, insbesondere aus einem thermoplastischen Kunststoff. Vorzugsweise ist für die Lagerdeckel 21, 22 sowie den Trägerkörper 90 derselbe Kunststoff verwendet, beispielsweise derselbe thermoplastische Kunststoff.

Beispielsweise ist der Trägerkörper 90 in einem Guss-Verfahren hergestellt, bei dem das Blechpaket 81 vergossen wird.

Der Trägerkörper 90 weist Lagerdeckel-Aufnahmen 91 für die Lagerdeckel 21, 22 auf. In die Lagerdeckel-Aufnahmen 91 sind z.B. Umfangswände 26 der Lagerdeckel 21, 22 einsteckbar, z.B. mit ihren die Stirnseiten.

Der Lagerdeckel 21 ist näher beim Abtriebsabschnitt 34 der Motorwelle 30, 130 angeordnet. Der Lagerdeckel 22 am davon entfernteren Bereich. Die Lagerdeckel 21, 22 verschließen das Blechpaket 81 aneinander entgegengesetzten Längsendbereichen. Der Lagerdeckel 21 steht weniger weit vor die Stirnseite des Blechpakets 41, 141 vor als der Lagerdeckel 22. Der Lagerdeckel 21 weist einen Aufnahmeraum 21A für den Flanschkörper 68 auf.

Das Lager 24 ist näher bei den potentiell stromführenden Blechpaketen 41, 81 als das Lager 25.

Das Lager 24 und das Lager 25 sind zwar elektrisch leitend mit dem Lagerabschnitt 31 und somit der Motorwelle 30, 130 verbunden, so dass an sich die Gefahr besteht, dass eine Spannung von der Erregerspulenanordnung 86 auf die Motorwelle 30, 130 überspringt.

Durch den elektrisch isolierenden Flanschkörper 68 jedoch ist ein ausreichender elektrischer Isolationsabstand gegeben, so dass diese Gefahr nicht mehr besteht.

Das Lager 25 hingegen hat einen größeren Längsabstand in Bezug auf die Drehachse D zur Stirnseite der Blechpakete 41, 81, so dass auch hier die Gefahr eines elektrischen Überschlags von beispielsweise der Erregerspulenanordnung 86 auf die Motorwelle 30, 130 im Bereich des Lagers 25 nicht droht. Zudem sorgt der elektrisch isolierende Rohrabschnitt 73 der Isolationshülse 60, der vor das Blechpaket 41 in Richtung des Lagerdeckels 22 vorsteht, für eine ausreichende elektrische Isolation.

Die Spulenleiter 88 der Erregerspulen 87 verlaufen im Blechpaket 81 durch Nuten 89 hindurch, die beispielsweise parallel zur Drehachse D oder schräg dazu geneigt angeordnet sind. Die Nuten 89 haben Einführöffnungen 89D, die zu einem Innenumfang 82A der Rotoraufnahme 82 offen sind. Die Nuten 89 erstrecken sich zwischen den Stirnseiten 84, 85. Durch die Einführöffnungen 89D können die Spulenleiter 88 in die Nuten 89 eingebracht werden und beispielsweise um Wickelköpfe oder Wickelhämmer des Blechpakets 81 herum gewickelt werden.

Zwar sind die der Rotoraufnahme 82 des Stators 80 zugewandten Abschnitte des Blechpakets 81, die sich zwischen den Nuten 89 befinden, durch eine Innenverkleidung 92 abgedeckt, beispielsweise mit Kunststoff umspritzt, jedoch die Nuten 89 zunächst offen, so dass die Spulenleiter 88 in sie hineingelegt werden können.

Die Erregerspulen 87 sind weiterhin um Stützvorsprünge 93 an der Stirnseite 84 des Stators 80 herumgewickelt, die sozusagen Wickelköpfe bilden.

An der entgegengesetzten Stirnseite 85 sind Stützvorsprünge 94 vorgesehen, die ebenfalls zum Umwickeln mit Spulenleitern von Erregerspulen geeignet sind, jedoch in manchen Ausführungsformen nicht umwickelt sind.

Die Stirnseite 85 stellt sozusagen die Anschlussseite des Antriebsmotors 20, 120 dar. Dort sind elektrische Anschlusseinrichtungen 100 vorgesehen, an die beispielsweise Anschlussleitungen 15 zur elektrischen Verbindung mit der Bestromungseinrichtung 206, 306 anschließbar oder angeschlossen sind. Die Anschlussleitungen 15 weisen einen Steckverbinder zum Anstecken an eine Bestromungseinrichtung 206, 306 auf. Die Anschlusseinrichtungen 100 kann man auch als Terminals bezeichnen.

Die Anschlussleitungen 15 können beispielsweise an die Anschlusseinrichtungen 100 angesteckt sein oder auch mit diesen direkt verlötet sein. Die Anschlusseinrichtungen 100 weisen beispielsweise als Kontaktvorsprünge ausgestaltete Anschlusskontaktbereiche 101 auf, an die Anschlussstecker, die mit den Anschlussleitungen verbunden sind, angesteckt werden können. Des Weiteren sind an den Anschlusskontaktbereichen 101 Löcher 102 vorgesehen, durch die beispielsweise ein Anschlussleiter der Anschlussleitungen 15 hindurch geführt und mit der Anschlusseinrichtung 100 verlötet oder in sonstiger Weise elektrisch verbunden sein kann. Beispielsweise wäre auch eine Verschweißung eines derartigen Anschlussleiters mit der Anschlusseinrichtung 100 ohne weiteres möglich.

Die Anschlusseinrichtungen 100 sind mit einer Steckmontage am Trägerkörper 90 anordenbar. Der Trägerkörper 90 weist Halter 95 für die Anschlusseinrichtungen 100 auf. Die Halter 95 umfassen Steckaufnahmen 96, in die die Anschlusseinrichtungen einsteckbar sind. Die Steckaufnahmen 96 sind zwischen Aufnahmevorsprüngen 97, die vor die Stirnseite 85 des Trägerkörpers 90 vorstehen, vorgesehen. Beispielsweise haben die Aufnahmevorsprünge 97 einander gegenüberliegende Nuten 98, in die seitlich vor die Anschlusseinrichtungen 100 vorstehende Steckvorsprünge 104 einsteckbar sind, beispielsweise in der Art einer Nut-und-Feder-Verbindung.

Die Steckvorsprünge 104 stehen seitlich vor einen Grundkörper 103 einer jeweiligen Anschlusseinrichtung 100 vor. Die Steckvorsprünge 103 stehen quer zur Längserstreckung des Anschlusskontaktbereichs 101 vor den Grundkörper 103 vor. Die Steckvorsprünge 104 und der Anschlusskontaktbereich 101 bilden eine insgesamt etwa T-förmige Konfiguration. Beispielsweise bildet der Grundkörper 104 sozusagen einen Grundschenkel, von dem die Steckvorsprünge 104 in der Art von Seitenschenkeln seitlich vorstehen. Allerdings sind die Grundebenen der Steckvorsprünge 104 und des Grundkörpers 103 verschieden. Zwischen dem Grundkörper 103 und den Steckvorsprüngen 104 ist ein beispielsweise S-förmiger oder einander entgegengesetzte Krümmungen oder Bogenabschnitte aufweisender Übergangsabschnitt 106 vorgesehen. Mithin stehen also die Steckvorsprünge 104 vor eine Rückseite 115 des Grundkörpers 103 vor.

An den freien, vor dem Grundkörper 103 vorstehenden Endbereichen haben die Steckvorsprünge 104 Formschlusskonturen 105, insbesondere Zahnungen 105A, Widerhaken oder dergleichen, mit denen ein formschlüssiger Halt in der Steckaufnahme 96 möglich ist. Vorzugsweise können die Steckvorsprünge 104 sich anhand der Formschlusskonturen 105 sozusagen in der Steckaufnahme 96 des Trägerkörpers 90 verkrallen. Insbesondere führt ein Anschmelzen des Trägerkörpers 90 im Bereich der Steckaufnahmen 96, insbesondere der Nuten 98, beim Erhitzen der Anschlusseinrichtung 100, was nachfolgend noch beschrieben wird, dazu, dass sich eine formschlüssige Verbindung zwischen einerseits den Steckvorsprüngen 104, insbesondere deren Formschlusskonturen 105, und andererseits dem Material des Trägerkörpers 90 im Bereich der Steckaufnahme 96, insbesondere im Bereich der Nuten 98, hergestellt ist.

Die Zahnung 105A weist beispielsweise eine Verschränkung auf, d.h. dass beispielsweise ein Zahn 105B quer zur Hauptebene des Steckvorsprungs 104 vor diesen vorsteht.

Die Anschlusseinrichtungen 100 weisen Leiteraufnahmen 107 zur Aufnahme des jeweils anzuschließenden Abschnitts eines Spulenleiters 88 auf. Die Leiteraufnahmen 107 sind zwischen einerseits der Frontseite 114 des Grundkörpers 103 und andererseits einem Aufnahmearm 108 der Anschlusseinrichtung 100 gebildet, der anhand eines Verbindungsabschnitts 109 mit dem Grundkörper 103 verbunden ist. Insbesondere vorteilhaft ist es, wenn der Grundkörper 103, der Verbindungsabschnitt 109 und der Aufnahmearm 108 einstückig sind. Auch die Seitenschenkel oder Steckvorsprünge 104 des Grundkörpers 103 sind vorzugsweise mit diesem einstückig. Eine der Leiteraufnahme 107 zugewandte Innenseite des Verbindungsabschnitts 109 bildet einen Aufnahmeabschnitt oder eine Aufnahmemulde 116A der Leiteraufnahme 107.

Die Leiteraufnahme 107 weist im Bereich der Aufnahmemulde 116 A eine Auflagefläche 107A sowie eine dazu winkelige Schmalseite 107B auf. Zwischen der Schmalseite 107B und der großen Auflagefläche 107A ist eine zur Auflagefläche 107A und zur Schmalseite 107B schräggeneigte Schrägfläche 107C zum Abstützen des mindestens einen Spulenleiters 88 angeordnet. Die Schrägfläche 107C kann beispielsweise eine Fase, eine gekrümmte oder bogenförmige Fläche oder dergleichen sein. Jedenfalls verhindert die Schrägfläche 107C dass der Spulenleiter 88 auf einer scharfen Kante aufliegt.

Vorteilhaft ist die Anschlusseinrichtung 100 als ein Stanz-Biegeteil ausgestaltet, welches zunächst aus einem Grundmaterial ausgestanzt und dann durch entsprechende Umformung in die bisher beschriebene Gestalt gebracht ist.

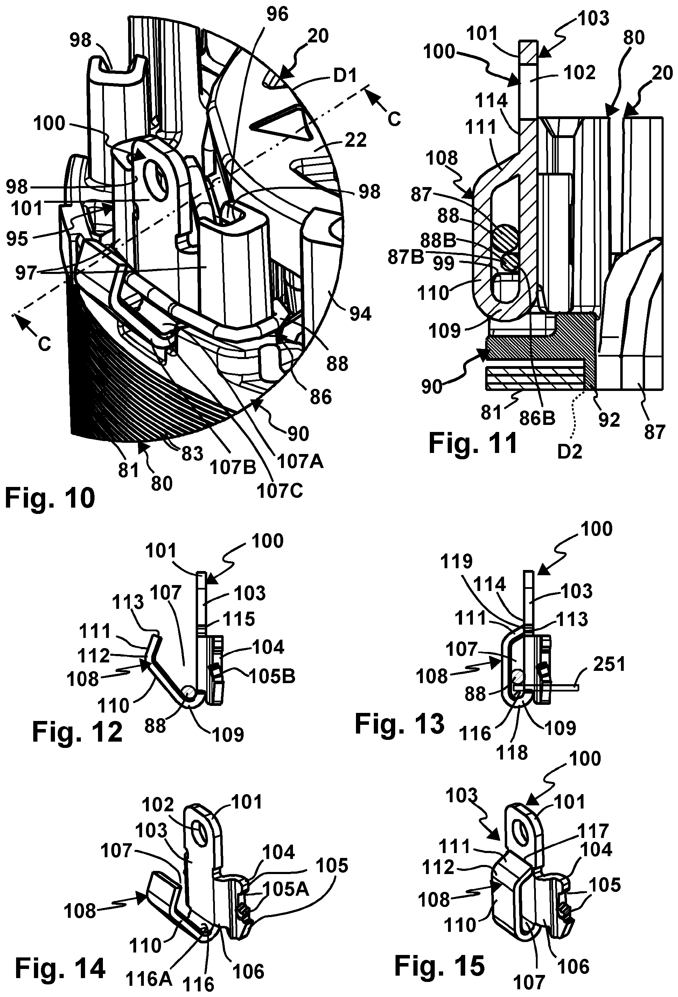

Die Montage und/oder Befestigung und/oder elektrische Kontaktierung des Spulenleiters 88 in der Leiteraufnahme 107 gestaltet sich wie folgt:
Zunächst ist die Leiteraufnahme 107 offen, indem nämlich der Aufnahmearm 108 noch weit von dem Grundkörper 103 absteht, siehe z.B. Figur 12 und 14. Der Spulenleiter 88 kann dabei bis zum Boden 116, d.h. den Innenumfang des Verbindungsabschnitts 109, der Leiteraufnahme 107 gelangen, siehe z.B. Figur 12. Diese Konfiguration ist aber eher unerwünscht, so dass durch zusätzliche Stützmaßnahmen, beispielsweise durch eine Stütze 251 einer Montageeinrichtung 250, der Spulenleiter 88 in einer vom Boden 116 der Leiteraufnahme 107 entfernten Lage gehalten wird.

Erfindungsgemäß ist die Konfiguration jedoch so getroffen, dass der Trägerkörper 90 eine Stützkontur 99 aufweist, auf der der Spulenleiter 88 bei der Montage bzw. beim Schließen der Anschlusseinrichtung 100 abgestützt ist, siehe Figur 10 und 11. Der Spulenleiter 88 liegt also auf der Stützkontur 99 auf, so dass er den Boden 116 nicht berührt. Die Stützkontur 99 ist beispielsweise an einer von den Nuten 98 abgewandten Außenseite der Aufnahmevorsprünge 97 vorgesehen. Beispielsweise ist die Stützkontur 99 als eine Stufe zwischen dem jeweiligen Aufnahmevorsprung 97 und der Partie des Trägerkörpers 90, von dem der Aufnahmevorsprung 97 absteht, ausgestaltet.

Die vom Boden 116 abgehobene Position des Spulenleiters 88 ist für die nachfolgende Schließ- und Schweiß-Operation vorteilhaft. Sie ist insbesondere dann vorteilhaft, wenn Spulenleiter mit kleinem Querschnitt verwendet werden, z.B. ein Spulenleiter 88B (Figur 11). Dieser Spulenleiter 88B kann selbst dann einen Abstand zum Boden 116, der sich beim nachfolgend beschriebenen Schweißvorgang deutlich erhitzt, aufweisen, wenn der Aufnahmearm 108 zum Grundkörper 103 hinbewegt ist, so dass er mit seinem freien Ende 113 an der Frontseite 114 des Grundkörpers 103 anliegt.

Der Spulenleiter 88B bildet z.B. einen Bestandteil einer Erregerspule 87B einer Erregerspulenanordnung 86B.

Der Aufnahmearm 108 hat an seinem vom Verbindungsabschnitt 109 abgewandten Endbereich einen Schließschenkel 111, der von einem mittleren Armabschnitt 110 des Aufnahmearms 108 winkelig absteht. Beispielsweise ist ein Krümmungsabschnitt oder Verbindungsabschnitt 112 zwischen dem mittleren Armabschnitt 110 und dem Schließschenkel 111 vorgesehen. Der Schließschenkel 111 steht vom mittleren Armabschnitt 110 in Richtung der Frontseite 114 des Grundkörpers 103 vor, so dass sein freies Ende 113 die Frontseite 114 im geschlossenen Zustand der Leiteraufnahme 107 berührt, während zwischen dem mittleren Armabschnitt 110 und der Frontseite 114 des Grundkörpers 103 ein Abstand vorhanden ist, der die Leiteraufnahme 107 definiert.

Zum Schließen der Anschlusseinrichtungen 100 und Verschweißen dient eine Schweißzange 252 der Montageeinrichtung 250. Die Schweißzange 252 weist Zangenarme 253, 255 auf, an deren freien Endbereichen, die zum Kontakt mit der Anschlusseinrichtung 100 vorgesehen sind, Stützflächen 254, 256 vorgesehen sind. Die freien Endbereiche der Zangenarme 253, 255, die zum Eingriff mit der Anschlusseinrichtung 100 vorgesehen sind, laufen spitz zu, bilden also Spitzen 257 aus. Insbesondere beim Zangenarm 253, der an der Rückseite 115 der Anschlusseinrichtung 100 mit seiner Stützfläche 254 abstützend wirkt, ist diese spitze, schlanke Ausgestaltung des Zangenarms 253 vorteilhaft.

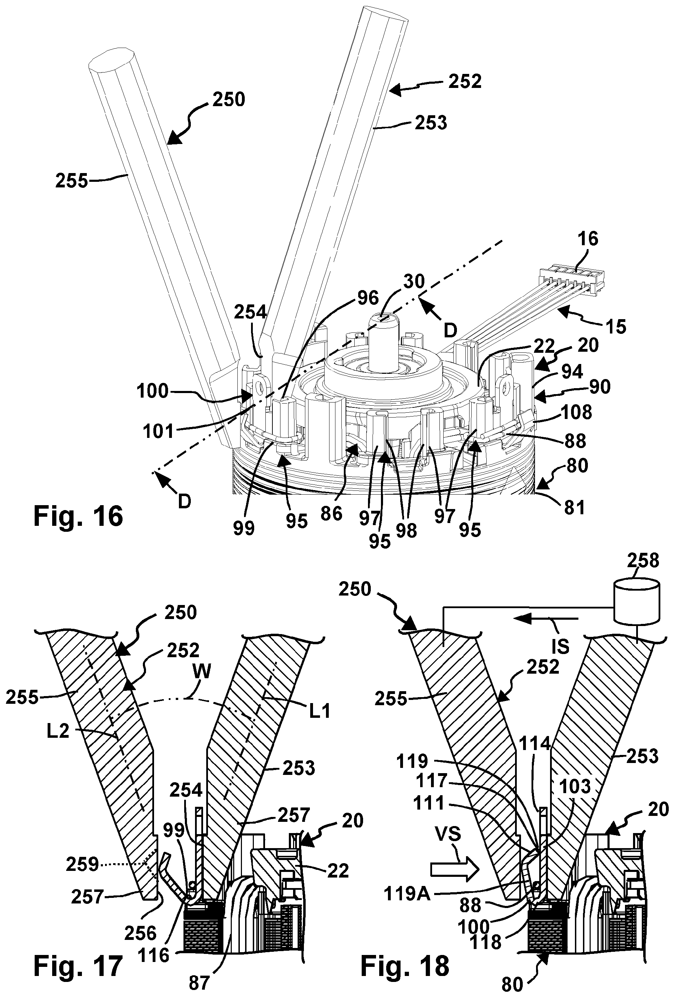

Die Zangenarme 253, 254 sind V-förmig angeordnet, dass die Spitzen 257 voneinander entgegengesetzten Seiten an der Anschlusseinrichtung 100 angreifen (siehe Figur 16), diese schließen und anschließend verschweißen.

Vorzugsweise verlaufen Längsachsen L1, L2 der Zangenarme 253, 255 in einem Winkel W, insbesondere etwa 20° bis 40°. Dadurch kann insbesondere die Spitze 257 des Zangenarms 253 in den Zwischenraum zwischen Lagerdeckel 22 und Rückseite 115 der Anschlusseinrichtung 100 gelangen und dort mit seiner Stützfläche 254 den Grundkörper 103 abstützen.

Der Zangenarm 254 wirkt im Sinne eines Schließens der Leiteraufnahme 107 auf den Aufnahmearm 108 ein. Beispielsweise liegt der Krümmungsabschnitt 112 an der Stützfläche 256 des Zangenarms 255 an. Die Stützflächen 254, 256 sind parallel oder im Wesentlichen parallel zueinander orientiert, wenn die Stützfläche 254 zur Stützfläche 256 hinbewegt wird, was als Vorschubbewegung VS in der Zeichnung dargestellt ist. Mithin bleibt also der Zangenarm 253 ortsfest stehen und stützt die Anschlusseinrichtung 100 rückseitig ab, während der Zangenarm 255 den Aufnahmearm 108 in Richtung des Grundkörpers 103 verstellt. Dann gelangt dessen freies Ende 113 seines Schließschenkels 111 in Kontakt mit der Frontseite 114 des Grundkörpers 103 der Anschlusseinrichtung 100. Mithin ist also die Leiteraufnahme 107 dann geschlossen und es ist eine Aufnahmeöse 119A gebildet.

Es ist auch möglich, dass eine Schweißzange oder dergleichen andere Fräseinrichtung den Aufnahmearm 108 aus einer zunächst langgestreckten, geradlinigen Form, bei der der Schließschenkel 111 beispielsweise noch nicht ausgebildet ist, zu einem Aufnahmearm 108 mit Schließschenkel 111 umformt, zum Beispiel anhand einer schematisch angedeuteten Verformungskontur 259 am Zangenarm 255.

Sodann werden die Zangenarme 253, 255 durch eine Bestromungseinrichtung 258 bestromt, indem die Zangenarme 253, 255 unterschiedliche Potentiale aufweisen und somit einen Stromfluss durch die Anschlusseinrichtung 100 erzeugen.

Der Schweißstrom IS fließt durch die sozusagen ringförmig geschlossene Anschlusseinrichtung 100, d.h. durch diejenigen Partien der Anschlusseinrichtung 100, die die Leiteraufnahme 107 verschließen, nämlich den Grundkörper 103 im Bereich der Leiteraufnahme 107 sowie den Aufnahmearm 108. Der Schweißstrom IS fließt dabei über Verbindungsbereiche 118 und 119, nämlich zum einen über den Verbindungsabschnitt 109, zum anderen aber auch über einen Kontaktbereich 117 zwischen dem freien Ende 113 des Schließschenkels 111 und der Frontseite 114 des Grundkörpers 103. Sowohl im Kontaktbereich 117 als auch im Bereich des Bodens 116 tritt eine große Hitze auf, die jedoch die Spulenleiter 88 oder 88B nicht beschädigt, weil diese einen Abstand zum Boden 116, aber auch zum oberen Kontaktbereich 117 aufweisen. Gleichwohl wird die Anschlusseinrichtung 100 im Bereich der Leiteraufnahme 107 derart heiß, dass ein Lack oder dergleichen andere Isolation der Spulenleiter 88 schmilzt und diese in elektrischen Kontakt mit den Oberflächen der Anschlusseinrichtung 100 gelangen.

Mithin wird also die Anschlusseinrichtung 100 sozusagen mechanisch geschlossen und anschließend mit denjenigen Spulenleitern 88 verschweißt, die in der Leiteraufnahme 107 aufgenommen sind. Die Montage ist einerseits schonend für die Spulenleiter 88, andererseits aber auch zuverlässig und dauerhaft belastbar, weil nämlich die Spulenleiter 88 durch den vorgenannten Pressvorgang und den Schweißvorgang zwar mechanisch etwas verändert werden können, jedoch nicht derart geschwächt werden oder in ihrer Querschnittsgeometrie verändert werden, dass sie beispielsweise beim Betrieb des Antriebsmotors 20, 120 brechen.

Wenn die Erregerspulen 87 in die Nuten 89 eingelegt sind, werden sie durch Nutabdeckungen 180 verschlossen.

Die Nutabdeckungen 180 weisen einen Profilkörper 181 auf. Die Nutabdeckungen 180 bestehen vorzugsweise aus Kunststoff und/oder einem elektrisch isolierenden Material. Der Profilkörper 181 ist beispielsweise als Kunststoffteil oder Kunststoff-Wandkörper ausgestaltet.

Der Profilkörper 181 bildet einen Wandkörper 182, der sozusagen eine Verschlusswand für eine jeweilige Nut 89 darstellt.

Die Nutabdeckung 180 oder der Profilkörper 181 weist eine Längsgestalt auf und erstreckt sich entlang einer Längsachse L8, die parallel zu einer Längsachse L9 der Nut 89 verläuft, wenn die Nutabdeckung 180 in der Nut 89 montiert ist. Längsschmalseiten oder Längsseiten 195 der Nutabdeckung 180 erstrecken sich entlang der Längsachse L8. Die Längsseiten 195 weisen quer zur Längsachse L8 einen Querabstand Q auf.

Längsendbereiche 183 der Nutabdeckung 180 stehen vorzugsweise bis zum Trägerkörper 90 vor das Blechpaket 81 vor, so dass eine elektrische Isolation über die gesamte Länge einer Nut 89 gegeben ist. Dort ist beispielsweise eine Verklebung, Verschweißung oder dergleichen andere Befestigung an einem oder beiden der Lagerdeckel 21 oder 22 vorteilhaft.

Die Nutabdeckung 181 weist einen Wandabschnitt 184 auf, der die Nut 88 quer zur Längsachse L8 vollständig abdeckt. Der Wandabschnitt 184 ist im Querschnitt, also quer zur Längsachse L8, etwa U-förmig oder bogenförmig und bildet an seinen Querendbereichen, also quer zur Längsachse L8, Formschlussvorsprünge 186 auf, die zum Eingriff in Formschlussaufnahmen 89B der Nuten 89 vorgesehen sind. Quer zur Längsachse L8 hat die Nutabdeckung 180 zwei Formschlussaufnahmen 186, die quer zur Längsachse L8 am weitesten vorstehende Abschnitte der Nutabdeckung 180 bilden und/oder einander gegenüberliegen. Die Formschlussvorsprünge 186 und die Formschlussaufnahme 89B bilden Formschlusskonturen 185, 89A, die die Nutabdeckung 180 quer zur Längsachse L8, die gleichzeitig die Längsachse der Nut 89 darstellt, in der Nut 89 halten.

Der Wandabschnitt 184 bildet zwischen den Formschlusskonturen 185 eine wannenförmige Gestalt aus, weist also einen Boden 187 auf. Der Boden 187 ist beispielsweise in die jeweilige Nut 89 hineingewölbt, erstreckt sich also in diese hinein. Selbstverständlich wäre auch eine umgekehrte Konfiguration möglich, bei der der Wandabschnitt 184 nicht nach radial außen bezüglich der Drehachse D, sondern nach radial innen vorsteht. Dort wäre er aber gegebenenfalls dem Rotor 40, 140 im Wege.

Von dem Wandabschnitt 184 erstrecken sich Seitenschenkel 188 weg. Die Seitenschenkel 188 sind aufeinander zugeneigt, d.h. ihre vom Wandabschnitt 184 entfernten freien Endbereiche sind einander zugeneigt. Somit bilden die Seitenschenkel 188 und der Wandabschnitt 184 im Übergangsbereich zu den Seitenschenkeln 188 die in Seitenansicht V-förmige Formschlusskontur 185, also einen Formschlussvorsprung 186, aus.

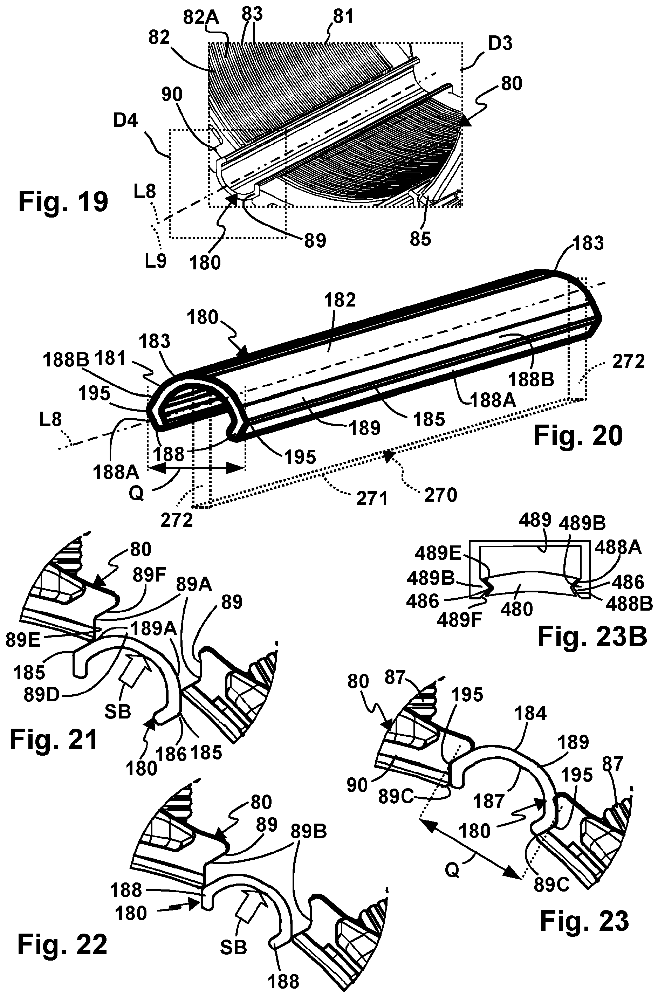

Die Montage der Nutabdeckung 180 gestaltet sich wie folgt:
An sich wäre es zwar möglich, die Nutabdeckung 180 beispielsweise von einer der Stirnseiten 84 oder 85 hier in eine jeweilige Nut 89 einzuschieben, d.h. entlang einer Steckachse, die parallel zur Drehachse D verläuft. Allerdings sind die Formschlusskonturen 185 quer zur Längsachse L8 aufeinander zu bewegbar, so dass ein Querabstand Q zwischen den Formschlusskonturen 185 verkleinerbar ist, so dass die Nutabdeckung 180 an einer Seitenkante 89C der Nut 89 vorbei in die Nut 89 hinein verschoben werden kann, siehe dazu Figuren 21 bis 23. Dabei gleitet der Wandabschnitt 184 mit seiner gerundeten Außenseite 189, also an seiner dem Boden 187 entgegengesetzten Seite, die insoweit eine Verdrängungskontur 189A bildet, an der Seitenkanten 89C vorbei, wobei der Wandabschnitt 184 biegeflexibel nachgibt, insoweit also einen biegeflexiblen Abschnitt 194 bildet. Dabei werden die Seitenschenkel 188 und die Formschlusskonturen 185 im Sinne einer Verengung des Querabstands Q aufeinander zu bewegt und rasten schließlich am Ende dieser Steckbewegung SB die Nutabdeckung 180 in die Nut 89 ein, d.h. die Formschlusskonturen 185 gelangen in Eingriff mit den Formschlusskonturen 89A.

Die Nutabdeckung 180 ist dann in der Nut 89 formschlüssig auf genommen, nämlich in zwei zueinander orthogonalen Richtungen quer zur Längsachse L8.

Eine von der Rotoraufnahme 82 abgewandte Fläche der Formschlussaufnahme 89B bildet eine Hintergreifkontur 89E. Eine der Rotoraufnahme 82 zugewandte Fläche der Formschlussaufnahme 89B bildet eine Stützkontur 89F.

Die Hintergreifkontur 89E und und/oder die Stützkontur 89F sind vorzugsweise flächig.

Bevorzugt stützen die Hintergreifkontur 89E und/oder die Stützkontur 89F die Nutabdeckung 180 über deren gesamte Längsachse L8 ab.

Die Seitenschenkel 188 weisen Hintergreifflächen 188A auf, die sich an der Hintergreifkontur 89E abstützen. An die Seitenschenkel 188 angrenzende Abschnitte des Wandabschnitts 184 weisen Stützflächen 188B auf oder bilden diese Stützflächen, die sich an den Stützkonturen 89F abstützen. Somit stützen die Hintergreifkonturen 89A die Nutabdeckung 180 in Richtung des Innenraums der Rotoraufnahme 82 oder der Drehachse D ab und die Stützkonturen 89F entgegengesetzt dazu, also in Richtung nach radial außen bezüglich der Drehachse D oder eines Bodens der jeweiligen Nut 89.

Der Vorteil dieser Konstruktionsmethode ergibt sich auch dadurch, dass beispielsweise der Trägerkörper 90 an den Längsendbereichen der Nut 89 nach radial innen in Richtung der Rotoraufnahme 82 etwas vorstehen kann, wenn die Nutabdeckungen 180 montiert werden. Deren Längsendbereiche 183 können nämlich dann in Hintergriff in Richtung der Rotoraufnahme 82 des vorstehenden Abschnitts des Trägerkörpers 90 gebracht werden.

Weiterhin liegen die Hintergreifflächen 188A und die Hintergreifkonturen 89E sowie die Stützflächen 188B und die Stützkonturen 89F flächig aneinander an, sodass ein Dichtsitz oder eine Abdichtung der Nut 89 realisiert ist und/oder die Nutabdeckung 180 die Nut 89 dicht verschließt.

Vorteilhaft haben die Nutabdeckungen 180 eine Dichtfunktion zur Abdichtung der Nuten 89, jedoch keine Stützfunktion für die Erregerspulen 87 der Erregerspulenanordnung 86. Die Schrägneigung der Hintergreifkonturen 89E und der Hintergreifflächen 188A wirkt vielmehr sogar im Sinne einer Löseschräge, die bei einer Kraftbeaufschlagung der Nutabdeckung 180 in einem Sinne aus der Nut 89 heraus oder nach radial innen bezüglich der Drehachse D eine Verformung oder Verschmälerung der Nutabdeckung 180 bewirkt und somit deren Lösen aus der Nut 89 erleichtert oder ermöglicht.

Ein alternatives Ausführungsbeispiel gemäß Figur 23B, das nur schematisch dargestellt ist, sieht beispielsweise eine alternativ zur Nut 89 ausgestaltete Nut 489 vor, in die eine Nutabdeckung 480 eingebracht ist. Die Nutabdeckung 480 weist an ihren Längsschmalseiten Formschlussaufnahmen 486 auf, die in Eingriff mit Formschlussvorsprüngen 489B der Nut 489 sind. Die Formschlussvorsprünge 489B liegen einander gegenüber. Die Formschlussaufnahmen 486 und die Formschlussvorsprünge 489B sind zueinander komplementär, beispielsweise V-förmig.

Von der Rotoraufnahme 82 abgewandte Flächen der Formschlussvorsprünge 489B bilden Hintergreifkonturen 489E. Der Rotoraufnahme 82 zugewandte Flächen der Formschlussvorsprünge 489B bilden Stützkonturen 489F. Die Hintergreifkontur 489E und und/oder die Stützkontur 489F sind vorzugsweise flächig. Bevorzugt stützen die Hintergreifkontur 489E und/oder die Stützkontur 489F die Nutabdeckung 480 über deren gesamte Längsachse L8 ab. Die Längsseiten der Nutabdeckung 480 oder die Formschlussaufnahmen 486 weisen Hintergreifflächen 488A auf, die sich an den Hintergreifkonturen 489E abstützen. Die die Formschlussaufnahmen 486 weisen ferner Stützflächen 488B auf oder bilden diese Stützflächen, die sich an den Stützkonturen 489F abstützen.

Der mechanische Aufbau des Stators 80 ist für beide Spannungsniveaus P1 und P2 vorzugsweise ganz oder teilweise identisch. Insbesondere ist die Rotoraufnahme 82 für den Rotor 40, 140 identisch, weist also beispielsweise den gleichen Durchmesser auf. Auch die Ausgestaltung der Nuten 89, also beispielsweise deren Formschlusskonturen 89A und/oder deren Breite und/oder Tiefe sind identisch. Vorteilhaft ist auch, wenn die Nutabdeckung 180 am Stator 80 unabhängig davon verwendbar oder verwendet ist, ob die Erregerspulenanordnung 86 für die Spannung P1 oder die Spannung P2 ausgestaltet und/oder angeordnet ist. Dadurch ist ein weitgehendes Gleichteilprinzip realisierbar.

Es ist möglich, die Nutabdeckungen 180 als einzelne Profilstücke bereitzustellen, d.h. dass sie bereits die in Figur 20 dargestellte langgestreckte Gestalt haben und der Länge der Nut 89 entsprechende Längen aufweisen.

Eine vorteilhafte Ausführungsform sieht jedoch vor, dass die Nutabdeckungen 180 aus einem Rollenmaterial 190 gewonnen werden. Das Rollenmaterial 190 steht beispielsweise als ein Wickel 191 bereit. Der Wickel 191 ist beispielsweise an einem Wickelträger 273, insbesondere einem entsprechenden Haltegestell, drehbar aufgenommen. Eine Abwicklungseinrichtung 274 wickelt das Rollenmaterial 190 von dem Wickel 191 ab.

Ein vom Wickel 191 abgewickelter Abschnitt 192 des Rollenmaterials 190 durchläuft beispielsweise eine Rollenanordnung 275 mit einer oder mehreren Rollen, insbesondere Umlenkrollen oder Führungsrollen.

Stromabwärts der Rollenanordnung 275 ist eine Glättungseinrichtung 276 vorgesehen, in der der Abschnitt 192 geglättet wird, so dass seine ursprünglich auf dem Wickel 191 gerundete Gestalt in eine langgestreckte Gestalt überführt wird. Die Glättungseinrichtung 276 umfasst beispielsweise mindestens ein Pressorgan 277, insbesondere einander gegenüberliegende Pressorgane 277, und/oder eine Erhitzungseinrichtung 278 mit Erhitzungskörpern 279, um das Rollenmaterial 190 des Abschnitts 192 in eine langgestreckte Gestalt zu bringen, wie sie in Figur 20 dargestellt ist. Mithin wird also das Rollenmaterial 190 durch die Glättungseinrichtung 276 in eine geradlinig lang gestreckte Form gebracht.

An die Glättungseinrichtung 276 schließt sich eine Schneideinrichtung 280 an, mit der vom Abschnitt 192 jeweils eine Länge abgelängt wird, die einer gewünschten Nutabdeckung 180 entspricht, also beispielsweise der Länge des Blechpakets 81 oder des Trägerkörpers 90. Die Schneideinrichtung 280 weist beispielsweise Schneidorgane 281, insbesondere Messer, Klingen, Sägeorgane oder dergleichen auf.

An dieser Stelle sei erwähnt, dass anstelle des Blechpakets 181 bzw. Stators 80 andere, d.h. kürzere oder längere Statoren anhand der Montageeinrichtung 270 mit Nutabdeckungen versehen werden können. Bedarfsweise werden also jeweils geeignete Nutabdeckungen 180 hergestellt, deren Länge auf die Länge des zu bestückenden Stators angepasst ist. Das Schneidorgan 280, beispielsweise ein Schneidmesser, schneidet also vom Abschnitt 192 jeweils eine Nutabdeckung 180 ab, die sodann von einem Halteorgan 271 ergriffen und in den Stator 80 eingesetzt wird.

Das Halteorgan 271, beispielsweise ein Greifer, umfasst Haltearme 272, die den Profilkörper 181 bzw. die Nutabdeckung 180 an ihren Längsendbereichen 183 ergreifen und in die Nut 89 anhand der Steckbewegung SB einsetzen können. Ohne weiteres wäre es möglich, dass das Halteorgan 271 eine Saugeinrichtung oder dergleichen Halteelement aufweist, welches die Nutabdeckung 180 im Bereich des Bodens 187 ansaugt und mit einer die Steckbewegung SB erzeugenden Kraftkomponente in die Nut 89 einsteckt.

Man erkennt also, dass durch Stecken, Fügen, Pressen und dergleichen wesentliche Komponenten des Motors 20, 120 herzustellen sind, nämlich beispielsweise die Anschlusseinrichtungen 100, die Abdeckung der Nuten 89 anhand der Nutabdeckungen 180.

Auch die nachfolgend beschriebene Magnetisierung der Magneten 51 folgt diesem Montagekonzept.

Die Magnete 51 sind nämlich bei der Montage am Rotor 40, 140 bzw. Blechpaket 41, 141 zunächst noch nicht magnetisiert. Ein magnetisierbares Material 51A eines jeweiligen Magnetkörpers 56 ist also zunächst nicht magnetisch, wenn der an sich noch nicht magnetische Magnetkörper 52 im Rahmen eines Steckvorgangs oder Pressvorgangs in eine der Halteaufnahmen 45 eingesteckt oder eingepresst wird. Das magnetisierbare Material 51A ist beispielsweise Neodym-Eisen-Bor (NdFeB), vorteilhaft mit einem Zusatz von Dysprosium, oder Samarium-Cobalt (SmCo).

An den Halteaufnahmen 45 sind beispielsweise Stützvorsprünge 48 vorgesehen, die Schmalseiten 54 eines jeweiligen Magnetkörpers 52 abstützen. Die Schmalseiten 54 verlaufen im am Rotor 40, 140 montierten Zustand der Magnete 50 parallel zur Drehachse D. Vorzugsweise sind die Magnetkörper 52 oder Magnete 51 zwischen die Stützvorsprünge 48 geklemmt.

Zwischen den Schmalseiten 54 erstrecken gegenüber den Schmalseiten 54 großflächigere Flachseiten 53. Normalenrichtungen der Flachseiten 53 sind vorzugsweise radial zur Drehachse D.

Die Blechpakete 41, 141 weisen Haltevorsprünge 49 zum Halten der Magnetkörper 52 auf. Die Haltevorsprünge 49 stehen beispielsweise zu den Flachseiten 53 vor und liegen mit ihren freien Endbereichen an den Flachseiten 53 an. Bevorzugt ist es, wenn sich die Haltevorsprünge 49 mit dem Magnetkörper 52 sozusagen verkrallen und/oder Widerlagervorsprünge bilden.

Die Bleche 43 der Blechpakete 41, 141 umfassen Bleche 43, die in einer vorbestimmten Winkelposition bezüglich der Drehachse D Aussparungen 59A aufweisen. Die Aussparungen 59A erstrecken sich vorzugsweise radial bezüglich der Drehachse D von einer der Flachseiten der jeweiligen Halteaufnahme 45 weg, beispielsweise nach radial innen zur Drehachse D hin. Bevorzugt ist es, wenn die Aussparungen 59 A parallel zur Drehachse D in einer Achslinie hintereinander angeordnet sind, also miteinander fluchten. Manche der Bleche 43 haben in die Aussparungen vorstehende Haltevorsprünge 59. Die Haltevorsprünge 59 stehen weiterhin in den Steckquerschnitt einer jeweiligen Halteaufnahme 45 vor, sodass sie beim Einstecken eines Magnetkörpers 52 in eine Halteaufnahme 45 in Eingriff mit dem Magnetkörper 52 gelangen und durch den Magnetkörper 52 in einer Steckrichtung SR, in der der Magnetkörper 52 in die Halteaufnahme 45 eingesteckt wird, umgebogen werden. Dabei kann ein Haltevorsprung 59 in die Aussparung 59A eines oder mehrerer benachbarter Bleche 43 hinein verdrängt werden. Eine Stirnseite eines jeweiligen Haltevorsprungs 59, die die Breite einer Schmalseite eines Bleche 43 aufweist, stützt sich dann schräg geneigt an der Flachseite 53 des Magnetkörpers 52 ab und verhindert ein Herausziehen des Magnetkörpers 52 aus der Halteaufnahme 45 entgegen der Steckrichtung SR.

Vorzugsweise sind die Magnetkörper 52 oder Magnete 51 im Klemmsitz in der Halteaufnahme 45 aufgenommen. Selbstverständlich wäre ein Verkleben, Verschweißen oder dergleichen andere Montage durchaus möglich. Das magnetisierbare Material 51A ist also in das jeweilige Blechpaket 41, 141 im noch nicht magnetisierten Zustand eingesteckt.

Sodann wird der Rotor 40, 140 anhand einer Wuchteinrichtung 285 gewuchtet. Dabei ist die Motorwelle 30, 130 und gegebenenfalls die Isolationshülse 60 bereits montiert. Mithin kann also der Rotor 40, 140 anhand der Motorwelle 30, 130 um seine Drehachse D anhand eines Motors 286 gedreht werden. Eine Messeinrichtung 287 stellt beispielsweise Unwuchten des Rotors 40, 140 fest.

Dann werden noch vorhandene Unwuchten beseitigt, indem beispielsweise anhand einer materialreduzierenden Einrichtung 288, beispielsweise einer Schleifeinrichtung, einer Fräseinrichtung oder dergleichen, mindestens eine Wuchtpartie 55 hergestellt werden. Dabei wird beispielsweise dort, wo eine Wuchtung notwendig ist, Material des Blechpakets 41, 141 abgetragen, wobei Späne, Metallstaub oder dergleichen entstehen. Das ist aber unproblematisch, da die Magnetkörper 52 noch nicht magnetisiert sind, wenn das Material des Blechpakets 41, 141 bearbeitet wird. Die Späne, Stäube oder dergleichen, die durch Abtrag der Bleche 43 entstehen, haften nicht magnetisch am Blechpaket 41, 141 an, so dass sie leicht entfernbar sind. Beim späteren Betrieb des Antriebsmotors 20, 120 sind dann also keine Metallspäne oder Stäube vorhanden, die beispielsweise die Lager 24 oder 25 beschädigen können.

Vorteilhaft ist es, wenn die Wuchtpartien 55 an denjenigen Bereichen des Blechpakets 41, 141 angebracht werden, wo das Blechpaket 41, 141 in radialer Richtung bezüglich der Drehachse D eine möglichst große Materialstärke oder Dicke aufweist, also insbesondere radial außen bezüglich der Magnete 51. Wenn also beispielsweise eine Unwucht U an einem zur Herstellung einer Wuchtpartie ungünstigen Bereich auftritt, ist ein vektorielles Wuchten bevorzugt, bei dem die Unwucht U in Kraftvektoren Ux und Uy zerlegt ist und diesen entsprechend durch die materialreduzierende Einrichtung 288 beispielsweise Wuchtpartien 55x und 55y radial außen am Blechpaket 41, 141 hergestellt werden. Die Wuchtpartien 55x und 55y befinden sich beispielsweise radial außen am Blechpaket 41, 141 von Halteaufnahmen 55, die in einem Winkelabstand zu Unwucht U unmittelbar neben derselben angeordnet sind.

Bei dem Rotor 40, 140 sind an den Stirnseiten 44 keine Wuchtkörper oder Wuchtgewichte notwendig. Dadurch sind beispielsweise die Einströmöffnungen und Ausströmöffnungen der Luftkanäle 46 nicht durch Wuchtgewichte oder Wuchtkörper verdeckt. Weiterhin kann Luft auch seitlich an den Magneten 51 vorbeiströmen, nämlich durch Luftkanäle 46A, die an den Halteaufnahmen 45 vorgesehen oder durch die Halteaufnahmen 45 bereitgestellt werden. Auch die Einströmöffnungen und Ausströmöffnungen der Luftkanäle 46A sind nicht durch Wuchtkörper oder Wuchtgewichte verdeckt
Eine Reinigungseinrichtung 289, beispielsweise eine Blaseinrichtung, eine Bürsteneinrichtung und/oder ein Staubsauger oder dergleichen, kann die beim Materialabtrag durch die materialreduzierende Einrichtung 288 entstehende metallische Partikel ohne weiteres vom Rotor 40, 140, insbesondere dem jeweiligen Blechpaket 41, 141 entfernen, solange die Magnetkörper 52 nicht magnetisch sind. Beispielsweise erzeugt die Reinigungseinrichtung 289 einen Luftstrahl LU, der Späne und dergleichen aus dem Bereich der Wuchtpartie 55 entfernt.

Wenn der Rotor 40, 140 gewuchtet ist, wird er anhand einer Magnetisierungseinrichtung 290 magnetisiert, d.h. insbesondere werden die Magnetkörper 52 magnetisch aktiviert. Die Magnetisierungseinrichtung 290 weist beispielsweise Magnetisierungsköpfe 291A, 291B, 291C, 291D auf.

Beispielsweise umfasst die Magnetisierungseinrichtung 290 eine Positioniereinrichtung 292, die die Motorwelle 30, 130 derart positioniert, insbesondere verdreht, dass die Magnete 51 den Magnetisierungsköpfen 291 winkelrichtig exakt gegenüberliegen.

Vorteilhaft wird der Rotor 40, 140 anhand einer mechanischen Kodierung 57 derart bezüglich der Magnetisierungsköpfe 291A, 291B, 291C, 291D positioniert, dass je ein Magnetisierungskopf 291A, 291B, 291C, 291D zwischen benachbarten Magneten 51 angeordnet ist.

Beispielsweise dient die Verdrehsicherungskontur 74 als die Kodierung 57, die beispielsweise an einem Anschlag 293, insbesondere einem Drehanschlag, der Magnetisierungseinrichtung 290 anschlägt, so dass der Rotor 40, 140 drehwinkelrichtig bezüglich der Magnetisierungsköpfe 291 angeordnet ist. Der Anschlag 293 ist im Zusammenhang mit der Wuchteinrichtung 285 dargestellt. Ohne weiteres können aber auch andere Komponenten des Rotors 40 als Kodierung 57 dienen, beispielsweise die Luftkanäle 46, in die entsprechende Anschläge der Magnetisierungseinrichtung 290 eingreifen können und/oder die optisch erfassbar sind. Vorteilhaft ist auch eine optische Erfassung der Drehwinkellage des Rotors 40, 140 möglich, z.B. durch eine Kamera oder dergleichen anderen optischen Sensor der Magnetisierungseinrichtung 290.

Die Magnetisierungsköpfe 291A, 291B, 291C, 291D erzeugen magnetische Felder MFA, MFB, MFC, MFD, welche die in einem Winkelabstand bezüglich der Drehachse D nebeneinander angeordneten Magnetkörper 52 oder Magnete 51 durchdringen, so dass diese dauerhaft magnetisiert werden und magnetische Pole ausbilden, die als Nordpole N und Südpole S angedeutet sind. Die magnetischen Felder MFA, MFB, MFC, MFD sind in gestrichelten Feldlinien mit Pfeilen entsprechend ihrer magnetischen Flussrichtung in der Zeichnung angedeutet.

Wenn die Magnete 51 der Rotoren 40, 140 magnetisiert sind, werden die Rotoren 40, 140 am Stator 80 montiert.

Es versteht sich, dass in den Halteaufnahmen 45 für die Magnete 51 auch mehrere Magnetkörper 52 oder Magnete 51 anordenbar sind, beispielsweise parallel zur Drehachse D eine Reihenanordnung von zwei oder mehreren Magnetkörpern 52 oder Magneten 51. Auch in diesem Fall ist eine Magnetisierung der jeweiligen Magnetkörper 52 ohne weiteres möglich, wenn sie bereits in den Halteaufnahmen 45 aufgenommen sind.

Bei der Magnetisierung durch die Magnetisierungseinrichtung 290 ist auch vorteilhaft, dass die Bleche 43 der Blechpakete 41, 141 magnetisch leitend sind, so dass sie die magnetischen Felder 292 der Magnetisierungseinrichtung 290 optimal durch die Magnetkörper 52 durchleiten können.

## Patentansprüche

1. Antriebsmotor für ein Sauggerät (400) oder eine Werkzeugmaschine in Gestalt einer Hand-Werkzeugmaschine (200, 300) oder einer halbstationären Werkzeugmaschine, wobei der Antriebsmotor (20, 120) einen Stator (80) mit einer Erregerspulenanordnung (86) und einen Rotor (40, 140) mit einer Motorwelle (30, 130) aufweist, die an dem Stator oder bezüglich des Stators (80) anhand einer Lageranordnung (24A) um eine Drehachse (D) drehbar gelagert ist, wobei der Antriebsmotor (20, 120) eine Anschlusseinrichtung (100) zum elektrischen Anschluss des Antriebsmotors an eine Bestromungseinrichtung (206, 306) zur Bestromung der Erregerspulenanordnung (86) aufweist, wobei die Anschlusseinrichtung (100) einen Grundkörper (103) zur Befestigung an dem Stator (80) und einen von dem Grundkörper (103) abstehenden Aufnahmearm (108) aufweist, zwischen denen eine Leiteraufnahme (107) für mindestens einen elektrischen Spulenleiter (88) einer Erregerspule (87) der Erregerspulenanordnung (86) gebildet ist, und wobei die Anschlusseinrichtung (100) einen Anschlusskontaktbereich (101) zum elektrischen Anschluss einer Anschlussleitung (15) zur Verbindung mit der Bestromungseinrichtung (206, 306) aufweist, und wobei der Aufnahmearm (108) und der Grundkörper (103) anhand zweier elektrisch leitender Verbindungsbereiche (118, 119) miteinander verbunden sind und eine die Leiteraufnahme (107) ringförmig umschließende Aufnahmeöse (119A) bilden, sodass die Leiteraufnahme (107) einen geschlossenen Zustand aufweist und ein Schweißstrom zwischen dem Grundkörper (103) und dem Aufnahmearm (108) über die elektrischen Verbindungsbereiche (118, 119) an der Leiteraufnahme (107) vorbei fließen kann, **dadurch gekennzeichnet, dass** an mindestens einem der elektrischen Verbindungsbereiche (118, 119) zwischen dem Grundkörper (103) und dem Aufnahmearm (108) eine Stützkontur (99) zum Abstützen des mindestens einen Spulenleiters (88) in einem Abstand zu einer Innenfläche, insbesondere einem Boden, der Leiteraufnahme (107) an dem Verbindungsbereich (118, 119) angeordnet ist, sodass der mindestens eine Spulenleiter (88) nicht in Berührkontakt mit dem Verbindungsbereich (118, 119) während einer Bestromung mit dem Schweißstrom ist, wobei die Stützkontur (99) an dem Stator (80) angeordnet ist oder einen Bestandteil der Anschlusseinrichtung (100) bildet, insbesondere an dem Grundkörper (103) der Anschlusseinrichtung (100) angeordnet ist.

2. Antriebsmotor nach Anspruch 1, **dadurch gekennzeichnet, dass** der Aufnahmearm (108) aus einer von dem Grundkörper (103) beabstandeten Stellung, in der die Leiteraufnahme (107) einen geöffneten Zustand aufweist und zum Einführen des mindestens einen Spulenleiters (88) an einer Seite offen ist, in eine zu dem Grundkörper (103) hin verstellte Stellung verstellbar ist, in der die Leiteraufnahme (107) den geschlossenen Zustand aufweist.

3. Antriebsmotor nach Anspruch 1 oder 2, **dadurch gekennzeichnet, dass** ein freies Ende des Aufnahmearms (108), insbesondere eine Stirnseite oder Schmalseite des Aufnahmearms (108), zur Bildung eines der elektrischen Verbindungsbereiche (119) vor und bei der Bestromung mit dem Schweißstrom in Berührkontakt mit dem Grundkörper (103) ist und/oder dass der Aufnahmearm (108) an einem oder beiden elektrischen Verbindungsbereichen (118, 119) mit dem Grundkörper (103) verschweißt ist, insbesondere anhand einer elektrischen Verschweißung.

4. Antriebsmotor nach einem der vorhergehenden Ansprüche, **dadurch gekennzeichnet, dass** der Aufnahmearm (108) anhand eines Verbindungsabschnitts (109) mit dem Grundkörper (103) fest verbunden oder einstückig ist.

5. Antriebsmotor nach Anspruch 4, **dadurch gekennzeichnet, dass** der Verbindungsabschnitt (109) einen der elektrischen Verbindungsbereiche (118) bildet und/oder dass der Verbindungsabschnitt (109) einen bogenförmigen oder gekrümmten Verlauf aufweist und/oder V-förmig oder U-förmig ist und/oder eine Aufnahmemulde oder einen Boden der Leiteraufnahme (107) bildet.

6. Antriebsmotor nach einem der vorhergehenden Ansprüche, **dadurch gekennzeichnet, dass** der Aufnahmearm (108) einen Armabschnitt (110) aufweist, der einer Frontseite (114) des Grundkörpers (103) im Bereich der Leiteraufnahme (107) im geschlossenen Zustand der Leiteraufnahme (107) in einem zur Aufnahme des mindestens einen Spulenleiters (88) geeigneten Abstand, insbesondere einem Parallelabstand, gegenüberliegt.

7. Antriebsmotor nach Anspruch 6, **dadurch gekennzeichnet, dass** der Armabschnitt (110) im geöffneten Zustand der Leiteraufnahme (107) in einem größeren Winkel von der Frontseite (114) des Grundkörpers (103) absteht als im geschlossenen Zustand der Leiteraufnahme (107) und/oder dass der Aufnahmearm (108) einen von dem Armabschnitt (110) in Richtung der Frontseite (114) des Grundkörpers (103) von dem Armabschnitt (110) abstehenden Schließschenkel (111) aufweist und/oder dass der Armabschnitt (110) im geschlossenen Zustand der Leiteraufnahme (107) im Wesentlichen parallel zur Frontseite (114) des Grundkörpers (103) verläuft und/oder dass die Leiteraufnahme (107) im Bereich des Armabschnitts (110) eine Längsgestalt zur Aufnahme mehrerer Spulenleiter (88) in einer Reihenanordnung parallel zur Längserstreckung des Armabschnitts (110) aufweist.

8. Antriebsmotor nach einem der vorhergehenden Ansprüche, **dadurch gekennzeichnet, dass** der Grundkörper (103) mindestens einen Steckvorsprung (104) zum Einstecken in eine Steckaufnahme (96) des Stators (80) aufweist.

9. Antriebsmotor nach Anspruch 8, **dadurch gekennzeichnet, dass** der mindestens eine Steckvorsprung (104) seitlich vor den Grundkörper (103) und/oder den Aufnahmearm (108) vorsteht und/oder von dem Grundkörper (103) an einander entgegengesetzten Seiten jeweils ein Steckvorsprung (104) absteht und/oder dass der mindestens eine Steckvorsprung (104) an seinem freien, vom Grundkörper (103) abstehenden Endbereich mindestens eine Formschlusskontur (105) zum formschlüssigen Eingriff in die Steckaufnahme (96) des Stators (80), insbesondere eine Zahnung, aufweist und/oder dass der mindestens eine Steckvorsprung (104) an einem die Leiteraufnahme (107) begrenzenden Abschnitt des Grundkörpers (103) angeordnet ist und/oder ein freier Endbereich des mindestens einen Steckvorsprungs (104) und der Grundkörper (103) in zueinander parallelen und voneinander beabstandeten Ebenen liegen.

10. Antriebsmotor nach einem der vorhergehenden Ansprüche, **dadurch gekennzeichnet, dass** die Stützkontur an dem Stator (80) angeordnet ist.

11. Antriebsmotor nach einem der vorhergehenden Ansprüche, **dadurch gekennzeichnet, dass** ein elektrischer Verbindungsbereich (118, 119) zwischen dem Grundkörper (103) und dem Aufnahmearm (108) zwischen zwei Stützkonturen (99) des Stators (80), insbesondere zwei Stützkonturen an einem elektrisch isolierenden Trägerkörper (90) des Stators (80), angeordnet ist, wobei die Stützkonturen den mindestens einen Spulenleiter (88) in einem Abstand zu dem insbesondere muldenförmigen Verbindungsbereich (118, 119) abstützen.

12. Antriebsmotor nach einem der vorhergehenden Ansprüche, **dadurch gekennzeichnet, dass** die Anschlusseinrichtung (100) im Bereich der Leiteraufnahme (107) eine langgestreckte Auflagefläche (107A) sowie eine dazu winkelige seitliche Schmalseite (107B) aufweist, wobei zwischen der Auflagefläche (107A) und der Schmalseite (107B) eine zur Auflagefläche (107A) und zur Schmalseite (107B) schräggeneigte Schrägfläche (107C) zum Abstützen des mindestens einen Spulenleiters (88) angeordnet ist.

13. Verfahren zur Montage einer elektrischen Anschlusseinrichtung (100) eines Antriebsmotors (20, 120) für ein Sauggerät (400) oder eine Werkzeugmaschine in Gestalt einer Hand-Werkzeugmaschine (200, 300) oder einer halbstationären Werkzeugmaschine, wobei der Antriebsmotor einen Stator (80) mit einer Erregerspulenanordnung (86) und einen Rotor (40, 140) mit einer Motorwelle (30, 130) aufweist, die an dem Stator oder bezüglich des Stators (80) anhand einer Lageranordnung (24A) um eine Drehachse (D) drehbar gelagert ist, wobei der Antriebsmotor eine Anschlusseinrichtung (100) zum elektrischen Anschluss des Antriebsmotors an eine Bestromungseinrichtung (206, 306) zur Bestromung der Erregerspulenanordnung (86) aufweist, wobei die Anschlusseinrichtung (100) einen Grundkörper (103) zur Befestigung an dem Stator (80) und einen von dem Grundkörper (103) abstehenden Aufnahmearm (108) aufweist, zwischen denen eine Leiteraufnahme (107) für mindestens einen elektrischen Spulenleiter (88) einer Erregerspule (87) der Erregerspulenanordnung (86) gebildet ist, und wobei die Anschlusseinrichtung (100) einen Anschlusskontaktbereich (101) zum elektrischen Anschluss einer Anschlussleitung (15) zur Verbindung mit der Bestromungseinrichtung (206, 306) aufweist, umfassend:
- Einführen des mindestens einen Spulenleiters (88) in die Leiteraufnahme (107),
- Verbinden des Aufnahmearms (108) und des Grundkörpers (103) unter Bildung zweier elektrisch leitender Verbindungsbereiche (118, 119), sodass der Aufnahmearm (108) und der Grundkörper (103) eine die Leiteraufnahme (107) ringförmig umschließende Aufnahmeöse (119A) bilden und die Leiteraufnahme (107) einen geschlossenen Zustand aufweist, und
- Anlegen von Schweißelektroden an den Grundkörper (103) und den Verbindungsarm und Bestromen mit einem Schweißstrom, der über die elektrischen Verbindungsbereiche (118, 119) an der Leiteraufnahme (107) vorbei zwischen dem Grundkörper (103) und dem Aufnahmearm (108) fließt,
**dadurch gekennzeichnet, dass** der mindestens eine Spulenleiter (88) an einer Stützkontur (99) abgestützt ist, die an mindestens einem der elektrischen Verbindungsbereiche (118, 119) zwischen dem Grundkörper (103) und dem Aufnahmearm (108) zum Abstützen des mindestens einen Spulenleiters (88) in einem Abstand zu einer Innenfläche, insbesondere einem Boden, der Leiteraufnahme (107) an dem Verbindungsbereich (118, 119) angeordnet ist, sodass der mindestens eine Spulenleiter (88) nicht in Berührkontakt mit dem Verbindungsbereich (118, 119) während der Bestromung mit dem Schweißstrom ist.

14. Verfahren nach Anspruch 13, **gekennzeichnet durch** Verstellen, insbesondere Biegen, des Aufnahmearms (108), insbesondere anhand mindestens einer Schweißelektrode, aus einer von dem Grundkörper (103) beabstandeten Stellung, in der die Leiteraufnahme (107) einen geöffneten Zustand aufweist und zum Einführen des Spulenleiters (88) an einer Seite offen ist, in eine zu dem Grundkörper (103) hin verstellte Stellung, in der die Leiteraufnahme (107) den geschlossenen Zustand aufweist.

15. Verfahren nach Anspruch 13 oder 14, **gekennzeichnet durch** partielles Verformen eines Endbereichs des Aufnahmearms (108), insbesondere anhand mindestens einer Schweißelektrode, in Richtung des Grundkörpers (103) derart, dass ein freies Ende des Aufnahmearms (108), insbesondere eine Stirnseite oder Schmalseite des Aufnahmearms (108), zur Bildung eines der elektrischen Verbindungsbereiche (118, 119) vor und bei der Bestromung mit dem Schweißstrom in Berührkontakt mit dem Grundkörper (103) ist.

## Claims

1. A drive motor for a suction device (400) or a machine tool in the form of a handheld power tool (200, 300) or a semi-stationary machine tool, wherein the drive motor (20, 120) includes a stator (80) having an excitation coil assembly (86) and a rotor (40, 140) having a motor shaft (30, 130), which is rotatably mounted around a rotational axis (D) on the stator or with respect to the stator (80) by means of a bearing assembly (24A), wherein the drive motor (20, 120) includes a connecting unit (100) for electrically connecting the drive motor to an energizing unit (206, 306) for energizing the excitation coil assembly (86), wherein the connecting unit (100) includes a base body (103) for fastening on the stator (80) and a receptacle arm (108) protruding from the base body (103), between which a conductor receptacle (107) for at least one electrical coil conductor (88) of an excitation coil (87) of the excitation coil assembly (86) is formed, and wherein the connecting unit (100) includes a connecting contact region (101) for electrically connecting a connecting line (15) for the connection to the energizing unit (206, 306), and wherein the receptacle arm (108) and the base body (103) are connected to one another by means of two electrically conductive connection regions (118, 119) and form a receptacle eye (119A) enclosing the conductor receptacle (107) in a ring shape, so that the conductor receptacle (107) has a closed state, and a welding current between the base body (103) and the receptacle arm (108) can flow past the conductor receptacle (107) via the electrical connection regions (118, 119) **characterized in that** on at least one of the electrical connection regions (118, 119) between the base body (103) and the receptacle arm (108), a support contour (99) for supporting the at least one coil conductor (88) at a distance to an inner surface, in particular a bottom, of the conductor receptacle (107) is arranged on the connection region (118, 119), so that the at least one coil conductor (88) is not in touch contact with the connection region (118, 119) during energizing using the welding current, wherein the support contour (99) is arranged on the stator (80) or forms part of the connection unit (100), in particular is arranged on the base body (103) of the connection unit (100).

2. The drive motor as claimed in claim 1, **characterized in that** the receptacle arm (108) is adjustable from a position spaced apart from the base body (103), in which the conductor receptacle (107) has an open state and is open on one side for the insertion of the at least one coil conductor (88), into a position adjusted toward the base body (103), in which the conductor receptacle (107) has the closed state.

3. The drive motor as claimed in claim 1 or 2, **characterized in that** a free end of the receptacle arm (108), in particular an end side or narrow side of the receptacle arm (108), is in touch contact with the base body (103) to form one of the electrical connection regions (119) before and during the energizing using the welding current and/or **in that** the receptacle arm (108) is welded at one or both electrical connection regions (118, 119) to the base body (103), in particular by means of an electrical weld.

4. The drive motor as claimed in any one of the preceding claims, **characterized in that** the receptacle arm (108) is permanently connected to or integral with the base body (103) by means of a connection portion (109).

5. The drive motor as claimed in claim 4, **characterized in that** the connection portion (109) forms one of the electrical connection regions (118) and/or **in that** the connection portion (109) has an arched or curved profile and/or is V-shaped or U-shaped and/or forms a receptacle trough or a bottom of the conductor receptacle (107).

6. The drive motor as claimed in any one of the preceding claims, **characterized in that** the receptacle arm (108) includes an arm portion (110), which is opposite to a front side (114) of the base body (103) in the region of the conductor receptacle (107) in the closed state of the conductor receptacle (107) at a distance suitable for receiving the at least one coil conductor (88), in particular a parallel distance.

7. The drive motor as claimed in claim 6, **characterized in that** the arm portion (110) protrudes at a larger angle from the front side (114) of the base body (103) in the open state of the conductor receptacle (107) than in the closed state of the conductor receptacle (107) and/or **in that** the receptacle arm (108) includes a closing leg (111) protruding from the arm portion (110) that protrudes from the arm portion (110) in the direction of the front side (114) of the base body (103) and/or in that the arm portion (110) extends essentially in parallel to the front side (114) of the base body (103) in the closed state of the conductor receptacle (107), and/or in that the conductor receptacle (107) includes, in the region of the arm portion (110), a longitudinal formation for accommodating multiple coil conductors (88) in a series arrangement in parallel to the longitudinal extension of the arm portion (110).

8. The drive motor as claimed in any one of the preceding claims, **characterized in that** the base body (103) includes at least one insertion projection (104) to be plugged into a socket (96) of the stator (80).

9. The drive motor as claimed in claim 8, **characterized in that** the at least one insertion projection (104) protrudes laterally from the base body (103) and/or the receptacle arm (108) and/or an insertion projection (104) protrudes from the base body (103) in each case on opposing sides and/or **in that** the at least one insertion projection (104) includes, on its free end region protruding from the base body (103), at least one formfitting contour (105) for formfitting engagement in the socket (96) of the stator (80), in particular a toothing and/or **in that** the at least one insertion projection (104) is arranged on a portion of the base body (103) delimiting the conductor receptacle (107) and/or a free end region of the at least one insertion projection (104) and the base body (103) are located in planes parallel to one another and spaced apart from one another.

10. The drive motor as claimed in any one of the preceding claims, **characterized in that** the support contour is arranged on the stator (80)

11. The drive motor as claimed in any one of the preceding claims, **characterized in that** an electrical connection region (118, 119) between the base body (103) and the receptacle arm (108) is arranged between two support contours (99) of the stator (80), in particular to support contours on an electrically insulating carrier body (90) of the stator (80), wherein the support contours support the at least one coil conductor (88) at a distance to the input particular trough-shaped connection region (118, 119).

12. The drive motor as claimed in any one of the preceding claims, **characterized in that** the connecting unit (100) includes, in the region of the conductor receptacle (107), an elongated support surface (107A) and a lateral narrow side (107B) angled thereto, wherein an oblique surface (107C) obliquely inclined to the support surface (107A) and to the narrow side (107B) for supporting the at least one coil conductor (88) is arranged between the support surface (107A) and the narrow side (107B).

13. A method for installing an electrical connecting unit (100) of a drive motor (20, 120) for a suction device (400) or a machine tool in the form of a handheld power tool (200, 300) or a semi-stationary machine tool, wherein the drive motor includes a stator (80) having an excitation coil assembly (86) and a rotor (40, 140) having a motor shaft (30, 130), which is rotatably mounted around a rotational axis (D) on the stator or with respect to the stator (80) by means of a bearing assembly (24A), wherein the drive motor (20, 120) includes a connecting unit (100) for electrically connecting the drive motor to an energizing unit (206, 306) for energizing the excitation coil assembly (86), wherein the connecting unit (100) includes a base body (103) for fastening on the stator (80) and a receptacle arm (108) protruding from the base body (103), between which a conductor receptacle (107) for at least one electrical coil conductor (88) of an excitation coil (87) of the excitation coil assembly (86) is formed, and wherein the connecting unit (100) includes a connecting contact region (101) for electrically connecting a connecting line (15) for the connection to the energizing unit (206, 306), comprising:
- inserting the at least one coil conductor (88) into the conductor receptacle (107),
- connecting the receptacle arm (108) and the base body (103) while forming two electrically conductive connection regions (118, 119), so that the receptacle arm (108) and the base body (103) form a receptacle eye (119A) enclosing the conductor receptacle (107) in a ring shape and the conductor receptacle (107) has a closed state, and
- applying welding electrodes to the base body (103) and the connection arm and energizing using a welding current, which flows via the electrical connection regions (118, 119) past the conductor receptacle (107) between the base body (103) and the receptacle arm (108)
**characterized in that** the at least one coil conductor (88) is supported on a support contour (99) which is provided on at least one of the connection regions (118, 119) between the base body (103) and the receiving arm (108) for supporting the at least one coil conductor (88) at a distance to an inner surface, in particular a bottom, of the conductor receptacle (107) at the connection region (118, 119) so that the at least one coil conductor (88) is not in contact with the connection region (118, 119) during energization with the welding current.

14. The method as claimed in claim 13, **characterized by** adjusting, in particular bending, the receptacle arm (108), in particular by means of at least one welding electrode, out of a position spaced apart from the base body (103), in which the conductor receptacle (107) has an open state and is open on one side for inserting the coil conductor (88), into a position adjusted toward the base body (103), in which the conductor receptacle (107) has the closed state.

15. The method as claimed in claim 13 or 14, **characterized by** partially deforming an end region of the receptacle arm (108), in particular by means of at least one welding electrode, in the direction of the base body (103) in such a way that a free end of the receptacle arm (108), in particular an end side or narrow side of the receptacle arm (108), is in touch contact with the base body (103) to form one of the electrical connection regions (118, 119) before and during the energizing using the welding current.

## Revendications

1. Moteur d'entraînement pour un appareil d'aspiration (400) ou une machine-outil sous la forme d'une machine-outil portative (200, 300) ou d'une machine-outil semi-stationnaire, le moteur d'entraînement (20, 120) possédant un stator (80) avec un arrangement de bobines d'excitation (86) et un rotor (40, 140) avec un arbre de moteur (30, 130) qui est monté de manière à pouvoir tourner sur le stator ou par rapport au stator (80) autour d'un axe de rotation (D) à l'aide d'un arrangement de palier (24A), le moteur d'entraînement (20, 120) possédant un dispositif de raccordement (100) destiné au raccordement électrique du moteur d'entraînement à un dispositif d'alimentation électrique (206, 306) destiné à l'alimentation électrique l'arrangement de bobines d'excitation (86), le dispositif de raccordement (100) possédant un corps de base (103) destiné à être fixé au stator (80) et un bras de réception (108) s'écartant du corps de base (103), entre lesquels est formé un logement de conducteur (107) pour au moins un conducteur de bobine électrique (88) d'une bobine d'excitation (87) de l'arrangement de bobines d'excitation (86), et le dispositif de raccordement (100) possédant une zone de contact de raccordement (101) destinée au raccordement électrique d'un câble de raccordement (15) servant à la connexion au dispositif d'alimentation électrique (206, 306), et le bras de réception (108) et le corps de base (103) étant reliés entre eux à l'aide de deux zones de connexion (118, 119) électriquement conductrices et formant un œillet de réception (119A) qui entoure de manière annulaire le logement de conducteur (107), de sorte que le logement de conducteur (107) présente un état fermé et qu'un courant de soudage puisse circuler entre le corps de base (103) et le bras de réception (108) par le biais des zones de connexion (118, 119) électriques au niveau du logement de conducteur (107), **caractérisé en ce qu'**un contour de soutien (99) destiné à soutenir l'au moins un conducteur de bobine (88) à une certaine distance d'une surface intérieure, en particulier d'un fond, du logement de conducteur (107) au niveau de la zone de connexion (118, 119) est disposé au niveau d'au moins l'une des zones de connexion (118, 119) électriques entre le corps de base (103) et le bras de réception (108), de sorte que l'au moins un conducteur de bobine (88) n'est pas en contact physique avec la zone de connexion (118, 119) pendant une alimentation électrique par le courant de soudage, le contour de soutien (99) étant disposé au niveau du stator (80) ou formant une partie intégrante du dispositif de raccordement (100), en particulier étant disposé au niveau du corps de base (103) du dispositif de raccordement (100).

2. Moteur d'entraînement selon la revendication 1, **caractérisé en ce que** le bras de réception (108) peut être déplacé d'une position éloignée du corps de base (103), dans laquelle le logement de conducteur (107) présente un état ouvert et est ouvert d'un côté pour l'introduction de l'au moins un conducteur de bobine (88), dans une position qui est ajustée en direction du corps de base (103), dans laquelle le logement de conducteur (107) présente l'état fermé.

3. Moteur d'entraînement selon la revendication 1 ou 2, **caractérisé en ce qu'**une extrémité libre du bras de réception (108), notamment un côté frontal ou un côté étroit du bras de réception (108), est en contact physique avec le corps de base (103) en vue de former l'une des zones de connexion (119) électriques avant et pendant l'alimentation électrique avec le courant de soudage et/ou **en ce que** le bras de réception (108) est soudé au corps principal (103) au niveau d'une ou des deux zones de connexion (118, 119) électriques, notamment à l'aide d'un soudage électrique.

4. Moteur d'entraînement selon l'une des revendications précédentes, **caractérisé en ce que** le bras de réception (108) est relié à demeure au corps de base (103) ou est réalisé d'un seul tenant avec celui-ci au moyen d'une portion de liaison (109).

5. Moteur d'entraînement selon la revendication 4, **caractérisé en ce que** la portion de liaison (109) forme l'une des zones de connexion (118) électriques et/ou **en ce que** la portion de liaison (109) présente un tracé en forme d'arc ou courbé et/ou est en forme de V ou de U et/ou forme une cavité de réception ou un fond du logement de conducteur (107).

6. Moteur d'entraînement selon l'une des revendications précédentes, **caractérisé en ce que** le bras de réception (108) possède une portion de bras (110) qui, à l'état fermé du logement de conducteur (107), se trouve en face d'un côté avant (114) du corps de base (103) dans la zone du logement de conducteur (107) à une distance appropriée pour recevoir l'au moins un conducteur de bobine (88), notamment une distance parallèle.

7. Moteur d'entraînement selon la revendication 6, **caractérisé en ce que** dans l'état ouvert du logement de conducteur (107), la portion de bras (110) s'écarte du côté avant (114) du corps de base (103) à un angle plus grand que dans l'état fermé du logement de conducteur (107) et/ou **en ce que** le bras de réception (108) possède une branche de fermeture (111) qui s'écarte de la portion de bras (110) en direction du côté avant (114) du corps de base (103) à partir de la portion de bras (110) et/ou **en ce que**, dans l'état fermé du logement de conducteur (107), la portion de bras (110) suit un tracé sensiblement parallèle au côté avant (114) du corps de base (103) et/ou **en ce que** le logement de conducteur (107) présente, dans la zone de la portion de bras (110), une forme longitudinale destinée à recevoir plusieurs conducteurs de bobine (88) en un arrangement en rangées parallèlement à l'étendue longitudinale de la portion de bras (110).

8. Moteur d'entraînement selon l'une des revendications précédentes, **caractérisé en ce que** le corps de base (103) possède au moins une partie saillante d'enfichage (104) destinée à être insérée dans un logement d'enfichage (96) du stator (80).

9. Moteur d'entraînement selon la revendication 8, **caractérisé en ce que** l'au moins une partie saillante d'enfichage (104) fait saillie latéralement devant le corps de base (103) et/ou le bras de réception (108) et/ou une partie saillante d'enfichage (104) s'écarte respectivement sur des côtés mutuellement opposés du corps de base (103) et/ou **en ce que** l'au moins une partie saillante d'enfichage (104) possède, au niveau de sa zone d'extrémité libre qui s'écarte du corps de base (103), au moins un contour à complémentarité de formes (105), en particulier une denture, destiné à l'engagement par complémentarité de formes dans le logement d'enfichage (96) du stator (80) et/ou **en ce que** l'au moins une partie saillante d'enfichage (104) est disposées au niveau d'une portion du corps de base (103) qui délimite le logement de conducteur (107) et/ou une zone d'extrémité libre de l'au moins une partie saillante d'enfichage (104) et du corps de base (103) se trouvent dans des plans parallèles et espacés l'un de l'autre.

10. Moteur d'entraînement selon l'une des revendications précédentes, **caractérisé en ce que** le contour de soutien est disposé sur le stator (80).

11. Moteur d'entraînement selon l'une des revendications précédentes, **caractérisé en ce qu'**une zone de connexion (118, 119) électrique entre le corps de base (103) et le bras de réception (108) est disposée entre deux contours de soutien (99) du stator (80), en particulier deux contours de soutien sur un corps porteur (90) électriquement isolant du stator (80), les contours de soutien soutenant l'au moins un conducteur de bobine (88) à une certaine distance de la zone de connexion (118, 119), en particulier en forme de cuvette.

12. Moteur d'entraînement selon l'une des revendications précédentes, **caractérisé en ce que** le dispositif de raccordement (100) possède, dans la zone du logement de conducteur (107), une surface d'appui (107A) allongée ainsi qu'un côté étroit (107B) latéral formant un angle par rapport à celle-ci, une surface oblique (107C) inclinée obliquement par rapport à la surface d'appui (107A) et par rapport au côté étroit (107B) servant à supporter l'au moins un conducteur de bobine (88) étant disposée entre la surface d'appui (107A) et le côté étroit (107B).

13. Procédé de montage d'un dispositif de raccordement électrique (100) d'un moteur d'entraînement (20, 120) pour un appareil d'aspiration (400) ou une machine-outil sous la forme d'une machine-outil portative (200, 300) ou d'une machine-outil semi-stationnaire, le moteur d'entraînement possédant un stator (80) avec un arrangement de bobines d'excitation (86) et un rotor (40, 140) avec un arbre de moteur (30, 130) qui est monté de manière à pouvoir tourner sur le stator ou par rapport au stator (80) autour d'un axe de rotation (D) à l'aide d'un arrangement de palier (24A), le moteur d'entraînement possédant un dispositif de raccordement (100) destiné au raccordement électrique du moteur d'entraînement à un dispositif d'alimentation électrique (206, 306) destiné à l'alimentation électrique l'arrangement de bobines d'excitation (86), le dispositif de raccordement (100) possédant un corps de base (103) destiné à être fixé au stator (80) et un bras de réception (108) s'écartant du corps de base (103), entre lesquels est formé un logement de conducteur (107) pour au moins un conducteur de bobine (88) électrique d'une bobine d'excitation (87) de l'arrangement de bobines d'excitation (86), et le dispositif de raccordement (100) possédant une zone de contact de raccordement (101) destinée au raccordement électrique d'un câble de raccordement (15) servant à la connexion au dispositif d'alimentation électrique (206, 306), comprenant :
- introduction de l'au moins un conducteur de bobine (88) dans le logement de conducteur (107),
- connexion du bras de réception (108) et du corps de base (103) en formant deux zones de connexion (118, 119) électriquement conductrices, de sorte que le bras de réception (108) et le corps de base (103) forment un œillet de réception (119A) qui entoure de manière annulaire le logement de conducteur (107) et le logement de conducteur (107) présente un état fermé, et
- application d'électrodes de soudage sur le corps de base (103) et le bras de liaison et alimentation électrique avec un courant de soudage qui passe par les zones de connexion (118, 119) électriques au niveau du logement de conducteur (107) entre le corps de base (103) et le bras de réception (108),
**caractérisé en ce que** l'au moins un conducteur de bobine (88) est soutenu au niveau d'un contour de soutien (99) qui est disposé au niveau d'au moins l'une des zones de connexion (118, 119) électriques entre le corps de base (103) et le bras de réception (108) pour soutenir l'au moins un conducteur de bobine (88) à une certaine distance d'une surface intérieure, en particulier d'un fond, du logement de conducteur (107) au niveau de la zone de connexion (118, 119), de telle sorte que l'au moins un conducteur de bobine (88) n'est pas en contact physique avec la zone de connexion (118, 119) pendant l'alimentation électrique en courant de soudage.

14. Procédé selon la revendication 13, **caractérisé par** le déplacement, notamment le pliage, du bras de réception (108), notamment à l'aide d'au moins une électrode de soudage, d'une position éloignée du corps de base (103), dans laquelle le logement de conducteur (107) présente un état ouvert et est ouvert d'un côté pour l'introduction du conducteur de bobine (88), dans une position qui est ajustée en direction du corps de base (103), dans laquelle le logement de conducteur (107) présente l'état fermé.

15. Procédé selon la revendication 13 ou 14, **caractérisé par** la déformation partielle d'une zone d'extrémité du bras de réception (108), notamment à l'aide d'au moins une électrode de soudage, en direction du corps de base (103) de telle manière qu'une extrémité libre du bras de réception (108), notamment un côté frontal ou un côté étroit du bras de réception (108), est en contact physique avec le corps de base (103) avant et pendant l'alimentation électrique avec le courant de soudage afin de former l'une des zones de connexion (118, 119) électriques.
